# EUROPEAN PATENT APPLICATION

(11) **EP 4 187 937 A1**
(43) Date of publication of application: **31.05.2023**
(21) Application number: 20947824.7
(22) Date of filing: 07.08.2020
(51) Int. Cl.: H04W 4/06

(54) **METHOD AND APPARATUS FOR CONFIGURING SECURITY INFORMATION**

(71) Applicant: Huawei Technologies Co., Ltd., Shenzhen, Guangdong 518129 (CN)
(72) Inventor: ZHANG, Bo, Shenzhen, Guangdong 518129 (CN); DENG, Juan, Shenzhen, Guangdong 518129 (CN); JIA, Jianxin, Shenzhen, Guangdong 518129 (CN)
(74) Representative: Pfenning, Meinig & Partner mbB
(86) International application number: PCT/CN2020/108022
(87) International publication number: WO 2022/027696

(57) **Abstract**

Embodiments of this application provide a security information configuration method and apparatus, which relate to the field of communication technologies. This can implement security information configuration between a terminal device and a network side in a 5G MBS architecture, and ensure security of user plane data in the 5G MBS architecture. The method is applied to a system including a multicast-broadcast service MBS architecture. The system includes a first network function network element and a second network function network element. The method includes: The first network function network element receives an identifier of a multicast group, and determines security information corresponding to the identifier of the multicast group. The security information is used to perform encryption protection and/or integrity protection on user plane data of the multicast group. The security information includes an encryption key and an encryption algorithm and/or an integrity protection key and an integrity protection algorithm. The first network function network element sends the security information to the second network function network element. Embodiments of this application are used for secure delivery of a multicast service or a broadcast service.

## Description

### TECHNICAL FIELD

This application relates to the field of communication technologies, and in particular, to a security information configuration method and apparatus.

### BACKGROUND

In a fifth generation (fifth generation, 5G) network, user plane security information is introduced for user plane protection. The security information may include two features: confidentiality protection and integrity protection. An implementation of the security information may be as follows: A session management function (session management function, SMF) determines the security information, and sends the security information to a radio access network (radio access network, RAN). The RAN may determine protection requirements of the confidentiality protection and the integrity protection based on the security information.

A 3rd generation partnership project (3rd Generation Partnership Project, 3GPP) research project report provides a fifth generation (fifth generation, 5G) multicast-broadcast service (multicast-broadcast service, MBS) architecture. Although in this architecture, the RAN may transmit data in a 5G MBS in a multicast or unicast manner, the multicast manner cannot support performing data protection at a packet data convergence protocol (packet data convergence protocol, PDCP) layer like the unicast manner. The multicast manner requires user plane data protection at a higher layer. For example, the multicast manner requires end-to-end (end-to-end, E2E) protection between a terminal device and an application function (application function, AF) network element, or E2E protection between the terminal device and a 5G core network (5G core network, 5GC).

In a multimedia broadcast multicast service (multimedia broadcast multicast service, MBMS) of an existing long term evolution (long term evolution, LTE) network, after UE establishes a connection to a multimedia broadcast multicast service center (broadcast multicast service center, BM-SC), the BM-SC may deliver a key of broadcast multicast data by using a hypertext transfer protocol (hypertext transfer protocol, http). However, a key delivery procedure in LTE is not completely applicable to the 5G MBS architecture. This is because in the 5G MBS architecture, functions of the BM-SC have been divided into functions such as a session management function (session management function, SMF) and a policy control function (policy control function, PCF) in a plurality of 5G network entities. Therefore, how to reuse a 5GC configuration procedure to complete security information configuration between the terminal device and a network side in the 5G MBS architecture is an urgent problem to be resolved.

### SUMMARY

Embodiments of this application provide a security information configuration method and apparatus. This can implement security information configuration between a terminal device and a network side in a 5G MBS architecture, and ensure security of user plane data in the 5G MBS architecture.

To achieve the foregoing objectives, the following technical solutions are used in embodiments of this application.

According to a first aspect, a security information configuration method is provided. The method is applied to a system including a multicast-broadcast service MBS architecture. The system includes a first network function network element and a second network function network element. The method includes: The first network function network element receives an identifier of a multicast group, and determines security information corresponding to the identifier of the multicast group. The security information is used to perform encryption protection and/or integrity protection on user plane data of the multicast group. The security information includes an encryption key and an encryption algorithm and/or an integrity protection key and an integrity protection algorithm. The first network function network element sends the security information to the second network function network element. The second network function network element includes one or more of a multicast service function user plane function (for example, MSF-U) network element, a multicast service function control plane function (for example, MSF-C) network element, a network exposure function (for example, NEF) network element, or a session management function (for example, SMF) network element. The first network function network element may include one or more of a unified data repository (for example, UDR) network element, the network exposure function (for example, NEF) network element, the session management function (for example, SMF) network element, or the multicast service function control plane function (for example, MSF-C) network element.

In this way, in a 5G MBS architecture, security information configuration can be completed through a network element in a 5G system, to ensure security of user plane data in the 5G MBS architecture. For example, the UDR network element may determine the security information corresponding to the identifier of the multicast group based on a security policy. Therefore, when requesting to obtain the security information from a network side, UE may obtain the security information from the UDR network element on the network side, to decrypt user plane data of an MBS based on the security information.

In a possible design, the security information further includes a security policy and/or a protection manner for the user plane data. The security policy indicates a protection requirement of the user plane data, and the protection requirement includes an encryption protection requirement and/or an integrity protection requirement. The protection manner indicates whether to perform encryption protection on the user plane data and/or whether to perform integrity protection on the user plane data. In this way, a network-side network element receiving the security information may perform protection on the user plane data based on the security information, or may perform protection on the user plane data based on the security policy or the protection manner.

In a possible design, the security information further includes the protection manner. The receiving an identifier of a multicast group, and determining security information corresponding to the identifier of the multicast group includes: receiving the identifier of the multicast group and the security policy from the network exposure function network element or the multicast service function control plane function network element, and determining the protection manner based on the security policy; or receiving the identifier of the multicast group and the protection manner from the network exposure function network element or the multicast service function control plane function network element; and generating the security information based on the protection manner.

In other words, a network element in the MBS may generate the security information based on the received security policy, or generate the security information based on the received protection manner, so that the network-side network element performs protection on the user plane data of the MBS based on the security information. For example, the UDR network element receives the identifier of the multicast group and the security policy from the NEF network element or the MSF-C network element, and the UDR network element determines the protection manner based on the security policy, and then generates the security information based on the protection manner. Alternatively, the UDR network element receives the identifier of the multicast group and the protection manner from the NEF network element or the MSF-C network element, and the UDR network element generates the security information based on the protection manner.

In a possible design, the sending the security information to the second network function network element includes: sending the security information to the network exposure function network element or the multicast service function control plane function network element. In other words, after generating the security information, the network-side network element may send the security information to another network element for storage. For example, the UDR network element sends the security information to the NEF network element or the MSF-C network element for storage. In this way, when the UE requests the security information, the network-side network element may obtain, from the NEF network element or the MSF-C network element, the security information corresponding to the identifier of the multicast group.

In a possible design, the first network function network element includes the unified data repository (for example, UDR) network element. After the generating the security information based on the protection manner, the method further includes: The unified data repository network element determines a correspondence between the security information and the identifier of the multicast group. The receiving an identifier of a multicast group, and determining security information corresponding to the identifier of the multicast group further includes: The unified data repository network element receives a request message from the session management function network element. The request message includes the identifier of the multicast group. The unified data repository network element determines the security information corresponding to the identifier of the multicast group based on the correspondence. The sending the security information to the second network function network element includes: The unified data repository network element sends the security information to the session management function network element.

It may be understood that the unified data repository network element stores the correspondence between the identifier of the multicast group and the security information. If a request message is subsequently received from the UE, to request to obtain the security information corresponding to the identifier of the multicast group, the unified data repository network element may respond with the security information to the UE based on the correspondence and through the second network function network element. For example, the UDR network element stores the correspondence. When the UDR network element receives a request message sent by the SMF network element, the UDR network element sends the security information to the SMF network element, so that the SMF network element sends the security information to the UE.

The correspondence stored by the unified data repository network element may be generated and stored by the unified data repository network element itself, or may be a correspondence received from another network element such as the network exposure function network element or the multicast service function control plane function network element.

In a possible design, the first network function network element includes the network exposure function network element or the multicast service function control plane function network element. The security information further includes the protection manner. The receiving an identifier of a multicast group, and determining security information corresponding to the identifier of the multicast group includes: The network exposure function network element or the multicast service function control plane function network element receives the identifier of the multicast group and the security policy from an application function network element. The network exposure function network element or the multicast service function control plane function network element determines the protection manner based on the security policy. The network exposure function network element or the multicast service function control plane function network element generates the security information based on the protection manner. The sending the security information to the second network function network element includes: The network exposure function network element or the multicast service function control plane function network element sends the security information to a unified data repository network element.

In other words, the security information configured on the network side may be generated by the network exposure function network element or the multicast service function control plane function network element, and the generated security information and the identifier of the multicast group are sent to the unified data repository network element for storage. For example, the NEF network element or the MSF-C network element receives the identifier of the multicast group and the security policy that are sent by the AF network element, the NEF network element or the MSF-C network element determines the security information based on the security policy, and the NEF network element or the MSF-C network element sends the security information to the UDR network element for storage. In this way, when the UE requests the security information, the network-side network element may obtain, from the UDR network element, the security information corresponding to the identifier of the multicast group and deliver the security information to the UE.

In a possible design, the generating the security information based on the protection manner includes: generating the encryption key and the encryption algorithm if the protection manner indicates to perform encryption protection on the user plane data; and generating the integrity protection key and the integrity protection algorithm if the protection manner indicates to perform integrity protection on the user plane data. If the protection manner indicates not to perform encryption protection on the user plane data and not to perform integrity protection on the user plane data, the network-side network element may also generate the encryption key, the encryption algorithm, the integrity protection key, and the integrity protection algorithm, but both the encryption algorithm and the integrity protection algorithm are null algorithms.

In a possible design, the first network function network element includes the network exposure function network element or the multicast service function control plane function network element. The receiving an identifier of a multicast group, and determining security information corresponding to the identifier of the multicast group includes: The network exposure function network element or the multicast service function control plane function network element receives the identifier of the multicast group and the security policy from an application function network element. The network exposure function network element or the multicast service function control plane function network element sends the security policy and the identifier of the multicast group to a unified data repository network element. The unified data repository network element may generate the security information based on the received security policy. Then, the unified data repository network element sends the security information and the identifier of the multicast group to the network exposure function network element or the multicast service function control plane function network element. Alternatively, the network exposure function network element or the multicast service function control plane function network element determines the protection manner based on the security policy, and sends the protection manner and the identifier of the multicast group to the unified data repository network element. The unified data repository network element may generate the security information based on the received protection manner. Then, the unified data repository network element sends the security information and the identifier of the multicast group to the network exposure function network element or the multicast service function control plane function network element. In other words, the network exposure function network element or the multicast service function control plane function network element receives the security information from the unified data repository network element.

In other words, when receiving the security policy, the network exposure function network element or the multicast service function control plane function network element may send the security policy to the unified data repository network element, so that the unified data repository network element generates the security information based on the security policy and feeds back the security information to the network exposure function network element or the multicast service function control plane function network element. Alternatively, the network exposure function network element or the multicast service function control plane function network element may first generate the protection manner based on the security policy, and send the protection manner to the unified data repository network element, so that the unified data repository network element generates the security information based on the protection manner and feeds back the security information to the network exposure function network element or the multicast service function control plane function network element.

For example, when receiving the identifier of the multicast group and the security policy, the NEF network element or the MSF-C network element may send the identifier of the multicast group and the security policy to the UDR network element, so that the UDR network element generates the security information based on the security policy and feeds back the security information to the NEF network element or the MSF-C network element. Alternatively, the NEF network element or the MSF-C network element may first generate the protection manner based on the security policy, and send the protection manner to the UDR network element, so that the UDR network element generates the security information based on the protection manner and feeds back the security information to the NEF network element or the MSF-C network element.

In a possible design, the sending the security information to the second network function network element includes: sending the security information to the multicast service function user plane function network element or the session management function network element.

It may be understood that, when the NEF network element or the MSF-C network element receives the identifier of the multicast group and the security information from the UDR network element, the NEF network element may further send the identifier of the multicast group and the security information to the SMF network element, and the UE may obtain the security information from the SMF network element when obtaining the security information. Alternatively, the MSF-C network element may further send the security information to the MSF-U network element, and the UE may obtain the security information from the MSF-U network element when obtaining the security information.

According to a second aspect, a security information configuration method is provided. The method is applied to a terminal device. A network in which the terminal device is located includes a session management function network element. The method includes: sending an identifier of a multicast group to the session management function network element, to request to join the multicast group; receiving security information from the session management function network element, where the security information is used to perform encryption protection and/or integrity protection on user plane data of the multicast group, the security information includes an encryption key and an encryption algorithm and/or an integrity protection key and an integrity protection algorithm, the security information further includes a security policy and/or a protection manner for the user plane data, the security policy indicates a protection requirement of the user plane data, the protection requirement includes an encryption protection requirement and/or an integrity protection requirement, and the protection manner indicates whether to perform encryption protection on the user plane data and/or whether to perform integrity protection on the user plane data; and decrypting the received user plane data based on the security information.

The terminal device may be UE. When there is security information configured in a 5G MBS, if the UE needs to join the multicast group, to request to obtain the security information, the UE may request to obtain the security information from the session management function (for example, SMF) network element. If the session management function network element stores the security information corresponding to the identifier of the multicast group, the session management function network element may directly deliver the security information to the UE. If the session management function network element does not store the security information corresponding to the identifier of the multicast group, the session management function network element may request to obtain the security information from another network element, for example, a unified data repository network element, and then deliver the security information to the UE. In this way, when a network-side network element in an MBS architecture may perform protection on data of the multicast group based on the security information, the UE may further decrypt the data based on the security information obtained through requesting. This ensures security of the user plane data in the MBS architecture.

According to a third aspect, a security information configuration method is provided. The method is applied to a system including a multicast-broadcast service MBS architecture. The system includes a unified data repository network element, a network exposure function network element, a multicast service function control plane function network element, a session management function network element, and a terminal device.

In a possible design, the unified data repository network element receives an identifier of a multicast group and a security policy from the network exposure function network element or the multicast service function control plane function network element. The unified data repository network element determines a protection manner based on the security policy. The unified data repository network element generates security information based on the protection manner.

Alternatively, the network exposure function network element or the multicast service function control plane function network element receives the identifier of the multicast group and the security policy. The network exposure function network element or the multicast service function control plane function network element determines the protection manner based on the security policy. The network exposure function network element or the multicast service function control plane function network element sends the identifier of the multicast group and the protection manner to the unified data repository network element. The unified data repository network element generates the security information based on the protection manner.

Further, the unified data repository network element may send the security information and the identifier of the multicast group to the network exposure function network element or the multicast service function control plane function network element. The security information may further include the protection manner.

The unified data repository network element may determine a correspondence between the security information and the identifier of the multicast group. When the unified data repository network element receives a request message from the session management function network element, where the request message includes the identifier of the multicast group, the unified data repository network element may determine the security information corresponding to the identifier of the multicast group based on the correspondence, and the unified data repository network element sends the security information to the session management function network element.

In another possible design, the network exposure function network element or the multicast service function control plane function network element receives the identifier of the multicast group and the security policy from an application function network element. The network exposure function network element or the multicast service function control plane function network element determines the protection manner based on the security policy. The network exposure function network element or the multicast service function control plane function network element generates the security information based on the protection manner. The network exposure function network element or the multicast service function control plane function network element sends the security information to the unified data repository network element.

Alternatively, the network exposure function network element or the multicast service function control plane function network element receives the identifier of the multicast group and the security policy from the application function network element. The network exposure function network element or the multicast service function control plane function network element sends the security policy and the identifier of the multicast group to the unified data repository network element. The unified data repository network element may generate the security information based on the received security policy. Then, the unified data repository network element sends the security information and the identifier of the multicast group to the network exposure function network element or the multicast service function control plane function network element. The network exposure function network element may further send the security information to the session management function network element. The multicast service function control plane function network element may further send the security information to a multicast service function user plane function network element.

Alternatively, the network exposure function network element or the multicast service function control plane function network element receives the identifier of the multicast group and the security policy from the application function network element. Alternatively, the network exposure function network element or the multicast service function control plane function network element may first generate the protection manner based on the security policy, and send the protection manner to the unified data repository network element, so that the unified data repository network element generates the security information based on the protection manner and feeds back the security information to the network exposure function network element or the multicast service function control plane function network element. The network exposure function network element may further send the security information to the session management function network element, and the multicast service function control plane function network element may further send the security information to the multicast service function user plane function network element.

When the terminal device determines to join the multicast group, the terminal device may send the identifier of the multicast group to the session management function network element, to request to join the multicast group. When storing the security information corresponding to the identifier of the multicast group, the session management function network element may directly deliver the security information to the terminal device. If the session management function network element does not store the security information corresponding to the identifier of the multicast group, the session management function network element may request to obtain the security information from another network element, for example, the unified data repository network element, and then deliver the security information to the terminal device.

The security policy indicates a protection requirement of user plane data, and the protection requirement includes an encryption protection requirement and/or an integrity protection requirement. The protection manner indicates whether to perform encryption protection on the user plane data and/or whether to perform integrity protection on the user plane data. In this way, a network-side network element receiving the security information may perform protection on the user plane data based on the security information, or may perform protection on the user plane data based on the security policy or the protection manner.

According to a fourth aspect, a security information configuration method is provided. The method is applied to a system including a multicast-broadcast service MBS architecture. The system includes a unified data repository network element, a network exposure function network element, and a session management function network element.

The unified data repository network element may receive an identifier of a multicast group and a security policy from the network exposure function network element. The unified data repository network element determines a protection manner based on the security policy, and generates security information based on the protection manner. The unified data repository network element sends the security information to the network exposure function network element. The unified data repository network element may further determine a correspondence between the security information and the identifier of the multicast group. When the unified data repository network element receives a request message from the session management function network element, where the request message includes the identifier of the multicast group, the unified data repository network element may determine the security information corresponding to the identifier of the multicast group based on the correspondence, and the unified data repository network element sends the security information to the session management function network element.

Alternatively, the network exposure function network element receives the identifier of the multicast group and the security policy from an application function network element. The network exposure function network element determines the protection manner based on the security policy. The network exposure function network element generates the security information based on the protection manner. The network exposure function network element may further send the security information to the unified data repository network element. The network exposure function network element may further send the security information to the session management function network element.

Alternatively, the network exposure function network element receives the identifier of the multicast group and the security policy from the application function network element. The network exposure function network element determines the protection manner based on the security policy. The network exposure function network element sends the protection manner and the identifier of the multicast group to the unified data repository network element. The unified data repository network element may generate the security information based on the received protection manner. The unified data repository network element sends the security information and the identifier of the multicast group to the network exposure function network element. The network exposure function network element may further send the security information to the session management function network element.

In a possible design, the security information further includes the security policy and/or the protection manner for user plane data. The security policy indicates a protection requirement of the user plane data, and the protection requirement includes an encryption protection requirement and/or an integrity protection requirement. The protection manner indicates whether to perform encryption protection on the user plane data and/or whether to perform integrity protection on the user plane data.

According to a fifth aspect, a security information configuration method is provided. The method is applied to a system including a multicast-broadcast service MBS architecture. The system includes a multicast service function control plane function network element and a multicast service function user plane function network element.

The multicast service function control plane function network element receives an identifier of a multicast group and a security policy from an application function network element. The multicast service function control plane function network element may send the identifier of the multicast group and the security policy to a unified data repository network element, so that the unified data repository network element determines security information based on the security policy. Alternatively, the multicast service function control plane function network element may send the identifier of the multicast group and a protection manner to the unified data repository network element, so that the unified data repository network element determines the security information based on the protection manner.

Alternatively, the multicast service function control plane function network element may further determine the protection manner based on the security policy, generate the security information based on the protection manner, and send the identifier of the multicast group and the security information to the multicast service function user plane function network element, so that the multicast service function user plane function network element performs protection on data based on the security information.

Alternatively, the multicast service function control plane function network element may further receive the identifier of the multicast group and the security information. The multicast service function control plane function network element may further send the identifier of the multicast group and the security information to the multicast service function user plane function network element, so that the multicast service function user plane function network element performs protection on the data based on the security information.

In a possible design, the security information further includes the security policy and/or the protection manner for user plane data. The security policy indicates a protection requirement of the user plane data, and the protection requirement includes an encryption protection requirement and/or an integrity protection requirement. The protection manner indicates whether to perform encryption protection on the user plane data and/or whether to perform integrity protection on the user plane data.

According to a sixth aspect, a security information configuration method is provided. The method is applied to a system including a multicast-broadcast service MBS architecture. The system includes a unified data repository network element and a session management function network element.

When receiving an identifier of a multicast group and a security policy, the unified data repository network element may determine security information based on the identifier of the multicast group and the security policy, and then send the security information to the session management function network element.

Alternatively, when receiving the identifier of the multicast group and a protection manner, the unified data repository network element may determine the security information based on the identifier of the multicast group and the protection manner, and then send the security information to the session management function network element.

The unified data repository network element may determine a correspondence between the security information and the identifier of the multicast group. When the unified data repository network element receives a request message from the session management function network element, where the request message includes the identifier of the multicast group, the unified data repository network element may determine the security information corresponding to the identifier of the multicast group based on the correspondence, and send the security information to the session management function network element.

In a possible design, the security information further includes the security policy and/or the protection manner for user plane data. The security policy indicates a protection requirement of the user plane data, and the protection requirement includes an encryption protection requirement and/or an integrity protection requirement. The protection manner indicates whether to perform encryption protection on the user plane data and/or whether to perform integrity protection on the user plane data.

According to a seventh aspect, a network function network element is provided. The network function network element is a first network function network element. The first network function network element is applied to a system of a multicast-broadcast service architecture. The system includes the first network function network element and a second network function network element. The first network function network element includes: a transceiver, configured to receive an identifier of a multicast group; and a processor, configured to determine security information corresponding to the identifier of the multicast group. The security information is used to perform encryption protection and/or integrity protection on user plane data of the multicast group. The security information includes an encryption key and an encryption algorithm and/or an integrity protection key and an integrity protection algorithm. The transceiver is further configured to send the security information to the second network function network element. The second network function network element includes one or more of a multicast service function user plane function network element, a multicast service function control plane function network element, a network exposure function network element, or a session management function network element.

In a possible design, the security information further includes a security policy and/or a protection manner for the user plane data. The security policy indicates a protection requirement of the user plane data, and the protection requirement includes an encryption protection requirement and/or an integrity protection requirement. The protection manner indicates whether to perform encryption protection on the user plane data and/or whether to perform integrity protection on the user plane data.

In a possible design, the security information further includes the protection manner. The transceiver is configured to receive the identifier of the multicast group and the security policy from the network exposure function network element or the multicast service function control plane function network element, and the processor is configured to determine the protection manner based on the security policy. Alternatively, the transceiver is configured to receive the identifier of the multicast group and the protection manner from the network exposure function network element or the multicast service function control plane function network element. The processor is configured to generate the security information based on the protection manner.

In a possible design, the transceiver is configured to send the security information to the network exposure function network element or the multicast service function control plane function network element.

In a possible design, the first network function network element includes a unified data repository network element. The processor is further configured to determine a correspondence between the security information and the identifier of the multicast group. The transceiver is further configured to receive a request message from the session management function network element. The request message includes the identifier of the multicast group. The processor is further configured to determine the security information corresponding to the identifier of the multicast group based on the correspondence. The transceiver is further configured to send the security information to the session management function network element.

In a possible design, the first network function network element includes the network exposure function network element or the multicast service function control plane function network element. The security information further includes the protection manner. The transceiver is configured to receive the identifier of the multicast group and the security policy from an application function network element. The processor is configured to determine the protection manner based on the security policy. The processor is configured to generate the security information based on the protection manner. The transceiver is configured to send the security information to a unified data repository network element.

In a possible design, the processor is configured to: generate the encryption key and the encryption algorithm if the protection manner indicates to perform encryption protection on the user plane data; and generate the integrity protection key and the integrity protection algorithm if the protection manner indicates to perform integrity protection on the user plane data.

In a possible design, the first network function network element includes the network exposure function network element or the multicast service function control plane function network element. The transceiver is configured to receive the identifier of the multicast group and the security policy from an application function network element. The transceiver is configured to send the security policy and the identifier of the multicast group to a unified data repository network element. Alternatively, the processor is configured to determine the protection manner based on the security policy, and the transceiver is configured to send the protection manner and the identifier of the multicast group to the unified data repository network element. The transceiver is configured to receive the security information from the unified data repository network element.

In a possible design, the transceiver is configured to: send the security information to the multicast service function user plane function network element or the session management function network element.

According to an eighth aspect, a terminal device is provided. A network in which the terminal device is located includes a session management function network element. The terminal device includes: a transceiver, configured to send an identifier of a multicast group to the session management function network element, to request to join the multicast group, where the transceiver is further configured to receive security information from the session management function network element, the security information is used to perform encryption protection and/or integrity protection on user plane data of the multicast group, the security information includes an encryption key and an encryption algorithm and/or an integrity protection key and an integrity protection algorithm, the security information further includes a security policy and/or a protection manner for the user plane data, the security policy indicates a protection requirement of the user plane data, the protection requirement includes an encryption protection requirement and/or an integrity protection requirement, and the protection manner indicates whether to perform encryption protection on the user plane data and/or whether to perform integrity protection on the user plane data; and a processor, configured to decrypt the received user plane data based on the security information.

According to a ninth aspect, an embodiment of this application provides a computer-readable storage medium, including computer instructions. When the computer instructions are run on an electronic device, the electronic device is enabled to perform the security information configuration method according to any one of the first aspect or the possible implementations of the first aspect.

According to a tenth aspect, an embodiment of this application provides a computer-readable storage medium, including computer instructions. When the computer instructions are run on an electronic device, the electronic device is enabled to perform the security information configuration method in the second possible implementation.

According to an eleventh aspect, an embodiment of this application provides a computer program product. When the computer program product runs on a computer, an electronic device is enabled to perform the security information configuration method according to any one of the first aspect and the possible implementations of the first aspect.

According to a twelfth aspect, an embodiment of this application provides a computer program product. When the computer program product runs on a computer, an electronic device is enabled to perform the security information configuration method in the possible implementations of the second aspect.

### BRIEF DESCRIPTION OF DRAWINGS

FIG. 1 is a schematic diagram of a basic 5G MBS architecture according to an embodiment of this application;
FIG. 2 is a schematic diagram of a basic 5G MBS architecture according to an embodiment of this application;
FIG. 3 is a schematic diagram of a basic 5G MBS architecture according to an embodiment of this application;
FIG. 4 is a main schematic flowchart of configuring a user plane security policy according to an embodiment of this application;
FIG. 5Aand FIG. 5B are a schematic flowchart of a security information configuration method according to an embodiment of this application;
FIG. 6 is a schematic flowchart of a security information configuration method according to an embodiment of this application;
FIG. 7 is a schematic flowchart of a security information configuration method according to an embodiment of this application;
FIG. 8 is a schematic flowchart of a security information configuration method according to an embodiment of this application;
FIG. 9 is a schematic flowchart of a security information configuration method according to an embodiment of this application;
FIG. 10A and FIG. 10B are a schematic flowchart of a security information configuration method according to an embodiment of this application;
FIG. 11A and FIG. 11B are a schematic flowchart of a security information configuration method according to an embodiment of this application;
FIG. 12A and FIG. 12B are a schematic flowchart of a security information configuration method according to an embodiment of this application;
FIG. 13A to FIG. 13C are a schematic flowchart of a security information configuration method according to an embodiment of this application;
FIG. 14 is a schematic flowchart of a security information configuration method according to an embodiment of this application;
FIG. 15 is a schematic diagram of a structure of a network function network element according to an embodiment of this application; and
FIG. 16 is a schematic diagram of a structure of a network function network element according to an embodiment of this application.

### DESCRIPTION OF EMBODIMENTS

Embodiments of this application may be applied to a 5G MBS architecture, and are used for a network-side device to configure security information, so that a terminal device joining a multicast broadcast service can decrypt user plane data based on the security information. This improves security of the user plane data in the 5G MBS architecture.

First, a basic 5G MBS architecture proposed in 3GPP is introduced.

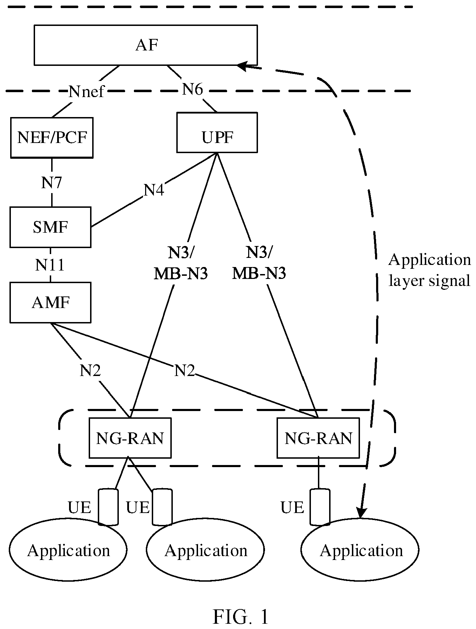

A 5G MBS architecture 1 may be shown in FIG. 1, and is obtained by enhancing functions of some network function (network function, NF) network elements in an existing 5G network architecture. The architecture 1 may include: an AF network element, a network exposure function (network exposure function, NEF) network element, a policy control function (Policy Control Function, PCF) network element, a session management function (session management function, SMF) network element, a user plane function (user plane function, UPF) network element, a next generation-radio access network (next generation-radio access network, NG-RAN) network element, a terminal device (for example, may be user equipment (user equipment, UE)), and the like.

The AF network element may be a multicast and/or broadcast data source, invoke an MBS provided by a 5G system, and send multicast and/or multicast data to a plurality of UEs through 5G.

The NEF network element may implement a 5G exposure function, and communicate with the AF network element. The AF network element may access some function network elements in a 5G network through the NEF network element. In addition, the NEF network element may also perform network element negotiation with the AF network element on a 5G MBS, and negotiated content includes quality of service (quality of service, QoS), a 5G MBS service domain, and the like.

The PCF network element may support the 5G MBS, provide an MBS session-related policy message for the SMF network element, and directly or indirectly receive MBS service information from the AF network element (through the NEF).

The SMF network element may control MBS transmission based on an MBS policy received from the PCF network element, configure an MBS flow and point-to-point or point-to-multipoint transmission on the UPF network element, configure the MBS flow and QoS information on a RAN network element, and configure session management of the MBS flow on the UE.

The UPF network element supports packet filtering of the MBS flow, and may transmit the MBS flow to the RAN network element in a point-to-point or point-to-multipoint manner; receives an MBS configuration from the SMF network element; checks an internet group management protocol (internet group management protocol, IGMP) packet, and notifies the SMF network element of the IGMP packet; and receives a unicast or multicast flow of the AF.

The NG-RAN network element may receive the MBS flow sent by the UPF network element, switch between a multicast manner and a unicast manner to transmit the MBS flow, and so on.

The UE may support configuration of the MBS policy, the session management of the MBS flow, joining in the MBS flow, an MBS at an access stratum, and the like.

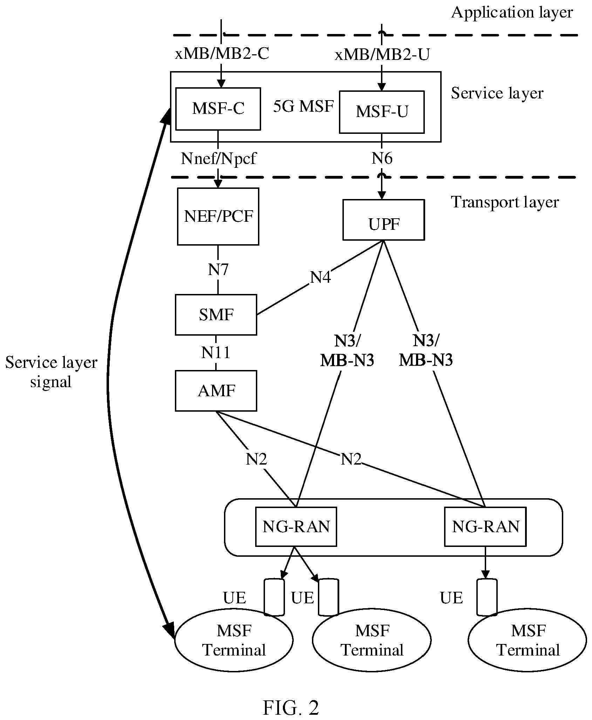

In correspondence to the architecture 1, as shown in FIG. 2, there is another 5G MBS architecture 2 in which a multicast service function (multicast service function, MSF) network element is added based on the architecture 1. In the architecture 2, an AF network element may use, through the MSF network element, an MBS provided by a 5G system. The MSF network element may request the MBS through an NEF network element or a PCF network element. The MSF network element may be used as an entry point of control plane signaling and user plane data. The MSF network element may include an MSF control plane function (MSF control plane, MSF-C) network element and an MSF network element user plane function (MSF user plane, MSF-U) network element. The MSF-C network element is configured to process signaling and receive signaling. The signaling is used for, for example, multicast service configuration and MBS bearer activation. The MSF-U network element is configured to transmit the user plane data, encode the user plane data, and so on.

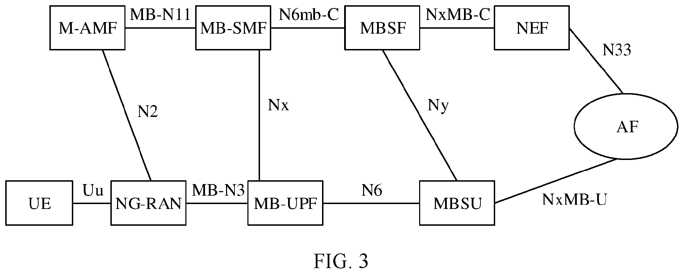

Another 5G MBS architecture 3 may be shown in FIG. 3. In the architecture 3, a new NF is introduced based on an existing 5G system architecture, and functions of existing network elements such as UE and an NG-RAN network element are enhanced to support a 5G MBS. The architecture 3 may include:
the UE, the NG-RAN, and an AMF network element obtained by enhancing an access and mobility management function (access and mobility management function, AMF), which may be referred to as an M-AMF network element;
a multicast/broadcast session management function (multicast/broadcast session management function, MB-SMF) network element and a multicast/broadcast user plane function (multicast/broadcast user plane function, MB-UPF) network element, where the MB-SMF may be configured for MBS session management and the like, the MB-UPF may be configured to transmit multicast and broadcast data, and the MB-SMF network element herein is equivalent to the MSF-C network element mentioned in this application;
a multicast/broadcast service function (multicast/broadcast service function, MBSF) network element, configured to process signaling, provide an interface for an AF, and so on; and
a multicast/broadcast service user plane function (multicast/broadcast service user plane function, MBSU) network element, which may be configured to transmit multicast and broadcast data and the like, where the MBSU network element is equivalent to the MSF-U network element mentioned in this application.

Currently, although a procedure of configuring a user plane security policy is introduced in the 5G network for user plane protection, the procedure does not support a security information negotiation mechanism in the 5G MBS for the architecture 1, the architecture 2, and the architecture 3.

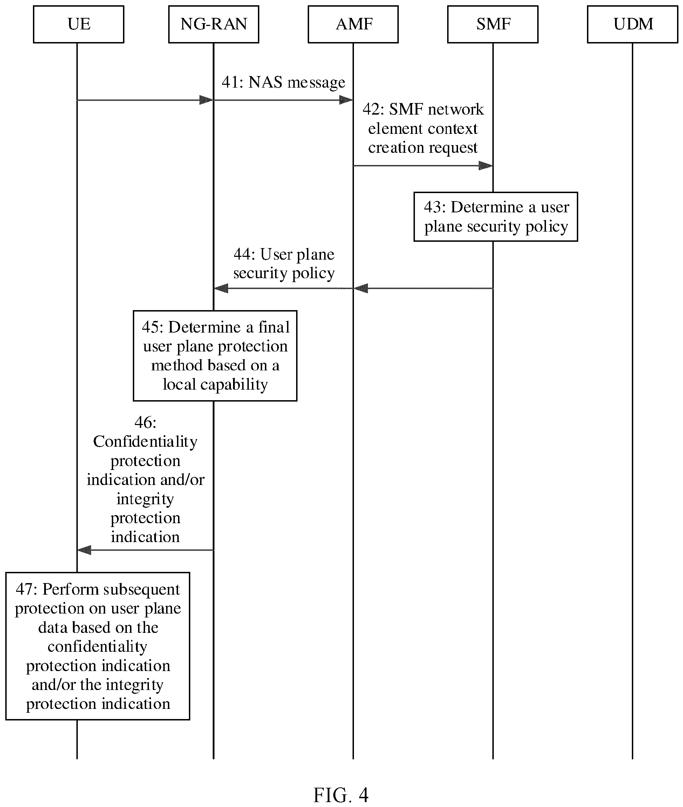

A current main procedure of configuring the user plane security policy is shown in FIG. 4 and includes the following steps:
41: In a protocol data unit (protocol data unit, PDU) session establishment procedure, UE sends a non-access stratum (non-access stratum, NAS) message to an AMF network element, where the message may include parameters such as a network slice identifier (single network slice selection assistance information, S-NSSAI) and a data network name (data network name, DNN).
42: The AMF network element creates an SMF network element context creation request (create SMF context request) and sends the context creation request to an SMF network element, or updates the SMF network element context request (update SMF context request) and sends the updated SMF network element context to an SMF network element, where the request may carry a subscription permanent identifier (subscription permanent identifier, SUPI), the S-NSSAI, the DNN, and the like.
43: The SMF network element determines the user plane security policy, and a specific manner may include: The SMF network element sends a request to a unified data management function (unified data management, UDM) network element, where the request carries the SUPI, the DNN, and/or the S-NSSAI, so that the UDM network element determines a subscribed user plane security policy based on the DNN and/or the S-NSSAI, and sends the subscribed user plane security policy to the SMF network element. Whether the SMF network element can obtain the subscribed user plane security policy from the UDM network element is optional, because the SMF network element may alternatively locally store a configured user plane security policy. If obtaining the subscribed user plane security policy from the UDM network element, the SMF network element uses the subscribed user plane security policy as a final user plane security policy. Otherwise, the SMF network element uses the locally configured user plane security policy corresponding to the DNN and/or the S-NSSAI as the final user plane security policy.

The user plane security policy herein includes a confidentiality protection requirement and an integrity protection requirement.

The confidentiality protection requirement may include:
A. "required", indicating that confidentiality protection is required;
B. "preferred", indicating that confidentiality protection is expected; and
C. "not needed", indicating that confidentiality protection is not required.

The integrity protection requirement may include:
A. "required", indicating that integrity protection is required;
B. "preferred", indicating that integrity protection is expected; and
C. "not needed", indicating that integrity protection is not required.

44: The SMF network element sends the user plane security policy to a base station through the AMF network element.

45: The base station determines a final user plane protection method based on a local capability (for example, whether an integrity protection rate is supported).

If a protection requirement is "required", the base station needs to perform protection. If the protection cannot be performed, the base station sends a rejection indication to the SMF network element.

If the protection requirement is "preferred", a protection manner is optional. The base station determines whether to perform protection.

If the protection requirement is "not needed", the base station does not perform protection.

The protection herein includes confidentiality protection and integrity protection.

46: The base station sends a confidentiality protection indication and/or an integrity protection indication, where the confidentiality protection indication is used to indicate whether confidentiality protection is required, and the integrity protection indication is used to indicate whether integrity protection is required.

47: The UE performs subsequent protection on user plane data based on the confidentiality protection indication and/or the integrity protection indication.

It can be learned that the existing procedure of configuring a user plane security policy introduced in the 5G network for user plane protection is not specific to the 5G MBS. Therefore, how to introduce configuration of the user plane security policy in the 5G MBS is a technical problem to be resolved in this application.

Therefore, embodiments of this application provide a security information configuration method. The method may be applied to the architecture 1, the architecture 2, or the architecture 3. For example, in the architecture 1, a procedure of delivering user plane data may be as follows: After a UPF receives, from an AF network element, the user plane data that needs to be delivered, the UPF network element sends the user plane data to a corresponding RAN node (a base station). Then, the RAN node sends the user plane data to UE. For example, in the architecture 2 or the architecture 3, a service layer (service layer) is introduced. The service layer includes an MSF-C network element and an MSF-U network element. The MSF-C network element mainly processes control plane data, and the MSF-U network element mainly processes user plane data. A procedure of delivering user plane data may be as follows: After receiving the user plane data from an AF network element, the MSF-U network element first sends the user plane data to a UPF network element. Then, the UPF network element sends the user plane data to a corresponding base station. Then, the base station broadcasts the user plane data to corresponding UE.

To ensure security of delivering user plane data of a 5G MBS in the architecture 1, the architecture 2, and the architecture 3, this application provides a plurality of security information configuration methods. For example, a method may include: As a network element that may be configured to store data in the architecture 1 and the architecture 2, a unified data repository (Unified Data Repository, UDR) network element may store data of a plurality of network elements. For example, the unified data repository network element may store data of network elements such as an NEF network element, a PCF network element, an SMF network element, and an AMF network element. Therefore, in this application, the UDR network element may obtain an identifier of a multicast group, determine security information corresponding to the identifier of the multicast group, and store the security information. The security information is used to perform encryption protection and/or integrity protection on user plane data of the multicast group, and the security information includes an encryption key and an encryption algorithm and/or an integrity protection key and an integrity protection algorithm. The UDR network element may determine the corresponding security information based on the identifier of the multicast group, or may receive and store the security information determined by another network element based on the identifier of the multicast group, where the another network element is, for example, the NEF network element or an MSF-C network element.

For another example, another security information configuration method may include: An NEF network element or an MSF-C network element receives an identifier of a multicast group and a security policy that are sent by an AF network element. The NEF network element or the MSF-C network element determines security information based on the security policy, and then sends the security information to a UDR network element. Alternatively, the NEF network element or the MSF-C network element receives the identifier of the multicast group and the security policy that are sent by the AF network element, and sends the identifier of the multicast group and the security policy to the UDR, or sends, to the UDR network element, the identifier of the multicast group and a protection manner that is determined by the NEF network element or the MSF-C network element based on the security policy. After the UDR network element determines the security information, the NEF network element or the MSF-C network element receives the security information sent by the UDR network element.

When joining the multicast group, UE may request the security information from a core network element, for example, an SMF network element. The SMF network element may obtain the security information from the UDR network element and send the security information to the UE. When receiving user plane data sent in downlink, the UE may decrypt the user plane data based on the security information.

A procedure of configuring the security information in this application is not limited to the foregoing two methods, and a plurality of specific implementations are described in the following embodiments.

An embodiment of this application provides a security information configuration method. The method may be applied to a system including an MBS. The system includes a first network function network element and a second network function network element. The method may include the following content:

The first network function network element receives an identifier of a multicast group, and determines security information corresponding to the identifier of the multicast group. The security information is used to perform encryption protection and/or integrity protection on user plane data of the multicast group. The security information includes an encryption key and an encryption algorithm and/or an integrity protection key and an integrity protection algorithm. The identifier of the multicast group may also be replaced with an identifier of a broadcast group. In other words, this application is applicable to protection of user plane data of a multicast service, and is also applicable to protection of user plane data of a broadcast service.

The first network function network element sends the security information to the second network function network element. The second network function network element includes one or more of a multicast service function user plane function network element, a multicast service function control plane function network element, a network exposure function network element, or a session management function network element. The first network function network element may include one or more of a unified data repository network element, the network exposure function network element, and the multicast service function control plane function network element.

Both the first network function network element and the second network function network element are network elements in a 5G MBS architecture. Therefore, the security information configuration method provided in this embodiment of this application is applicable to protection of user plane data in the 5G MBS architecture.

In some embodiments, the security information may further include a security policy and/or a protection manner for the user plane data.

The security policy indicates a protection requirement of the user plane data, and the protection requirement includes an encryption protection requirement and/or an integrity protection requirement.

The protection manner indicates whether to perform encryption protection on the user plane data and/or whether to perform integrity protection on the user plane data.

In some embodiments, the security information further includes the protection manner. The receiving an identifier of a multicast group, and determining security information corresponding to the identifier of the multicast group may include: receiving the identifier of the multicast group and the security policy from the network exposure function network element or the multicast service function control plane function network element, and determining the protection manner based on the security policy; or receiving the identifier of the multicast group and the protection manner from the network exposure function network element or the multicast service function control plane function network element; and generating the security information based on the protection manner.

For example, the unified data repository network element may receive the identifier of the multicast group and the security policy from the network exposure function network element or the multicast service function control plane function network element, and the unified data repository network element determines the protection manner based on the security policy. Alternatively, the unified data repository network element directly receives the identifier of the multicast group and the protection manner from the network exposure function network element or the multicast service function control plane function network element. Further, the unified data repository network element generates the security information based on the protection manner.

In some embodiments, the sending the security information to the second network function network element includes: sending the security information to the network exposure function network element or the multicast service function control plane function network element.

For example, after obtaining the security information, the unified data repository network element may send the security information to the network exposure function network element or the multicast service function control plane function network element. The network exposure function network element or the multicast service function control plane function network element stores the security information. If a terminal device subsequently requests the security information, the terminal device may obtain the security information from the network exposure function network element or the multicast service function control plane function network element.

In some embodiments, the first network function network element includes the unified data repository network element. After the generating the security information based on the protection manner, the method further includes: The unified data repository network element determines a correspondence between the security information and the identifier of the multicast group. In other words, the correspondence is stored by the unified data repository network element.

In view of this, the receiving an identifier of a multicast group, and determining security information corresponding to the identifier of the multicast group may further include:

The unified data repository network element receives a request message from the session management function network element. The request message includes the identifier of the multicast group. The unified data repository network element determines the security information corresponding to the identifier of the multicast group based on the correspondence. Therefore, the sending the security information to the second network function network element may include: The unified data repository network element sends the security information to the session management function network element.

In this way, when the terminal device requests the security information from the session management function network element, the session management function network element may obtain the security information from the unified data repository network element and then deliver the security information to the terminal device.

It should be noted that the correspondence stored in the unified data repository network element may be obtained in another manner, for example, an implementation described in the following embodiment.

In some embodiments, the first network function network element includes the network exposure function network element or the multicast service function control plane function network element, and the security information further includes the protection manner. The receiving an identifier of a multicast group, and determining security information corresponding to the identifier of the multicast group may include: The network exposure function network element or the multicast service function control plane function network element receives the identifier of the multicast group and the security policy from an application function network element. The network exposure function network element or the multicast service function control plane function network element determines the protection manner based on the security policy. The network exposure function network element or the multicast service function control plane function network element generates the security information based on the protection manner. Therefore, the sending the security information to the second network function network element may include: The network exposure function network element or the multicast service function control plane function network element sends the security information to the unified data repository network element.

In some embodiments, the generating the security information based on the protection manner may include: generating the encryption key and the encryption algorithm if the protection manner indicates to perform encryption protection on the user plane data; and generating the integrity protection key and the integrity protection algorithm if the protection manner indicates to perform integrity protection on the user plane data.

In some embodiments, the first network function network element includes the network exposure function network element or the multicast service function control plane function network element. The receiving an identifier of a multicast group, and determining security information corresponding to the identifier of the multicast group includes: The network exposure function network element or the multicast service function control plane function network element receives the identifier of the multicast group and the security policy from the application function network element. The network exposure function network element or the multicast service function control plane function network element sends the security policy and the identifier of the multicast group to the unified data repository network element, and the unified data repository network element generates the security information based on the security policy. Alternatively, the network exposure function network element or the multicast service function control plane function network element determines the protection manner based on the security policy, and sends the protection manner and the identifier of the multicast group to the unified data repository network element, and the unified data repository network element generates the security policy based on the protection manner.

In this way, the network exposure function network element or the multicast service function control plane function network element may receive the security information from the unified data repository network element.

In some embodiments, the sending the security information to the second network function network element includes: sending the security information to the multicast service function user plane function network element or the session management function network element.

For example, the network exposure function network element may send the security information to the session management function network element. The session management function network element stores the correspondence between the security information and the identifier of the multicast group. Alternatively, the multicast service function control plane function network element may send the security information to the multicast service function user plane function network element. The multicast service function user plane function network element stores the correspondence between the security information and the identifier of the multicast group.

After a procedure of configuring the security information is completed for an MBS architecture, when joining a multicast service corresponding to the identifier of the multicast group, the terminal device may obtain the security information from a network function network element on a network side, to decrypt, based on the security information, the user plane data received from the network side.

Therefore, an embodiment of this application further provides a security information configuration method. The method is applied to a terminal device. A network in which the terminal device is located includes a session management function network element. The method may include: sending an identifier of a multicast group to the session management function network element, to request to join the multicast group; receiving security information from the session management function network element, where the security information is used to perform encryption protection and/or integrity protection on user plane data of the multicast group, the security information includes an encryption key and an encryption algorithm and/or an integrity protection key and an integrity protection algorithm, the security information further includes a security policy and/or a protection manner for the user plane data, the security policy indicates a protection requirement of the user plane data, the protection requirement includes an encryption protection requirement and/or an integrity protection requirement, and the protection manner indicates whether to perform encryption protection on the user plane data and/or whether to perform integrity protection on the user plane data; and decrypting the received user plane data based on the security information.

In this way, after a network function network element in an MBS performs protection on the user plane data based on the security information, the terminal device may decrypt, based on the security information obtained through requesting, a ciphertext delivered by a network side, to obtain decrypted user plane data.

In the following embodiments, an example in which the unified data repository network element is a UDR network element, the network exposure function network element is an NEF network element, the multicast service function user plane function network element is an MSF-U network element, the multicast service function control plane function network element is an MSF-C network element, and the session management function network element is an SMF network element is used for description.

### Embodiment 1

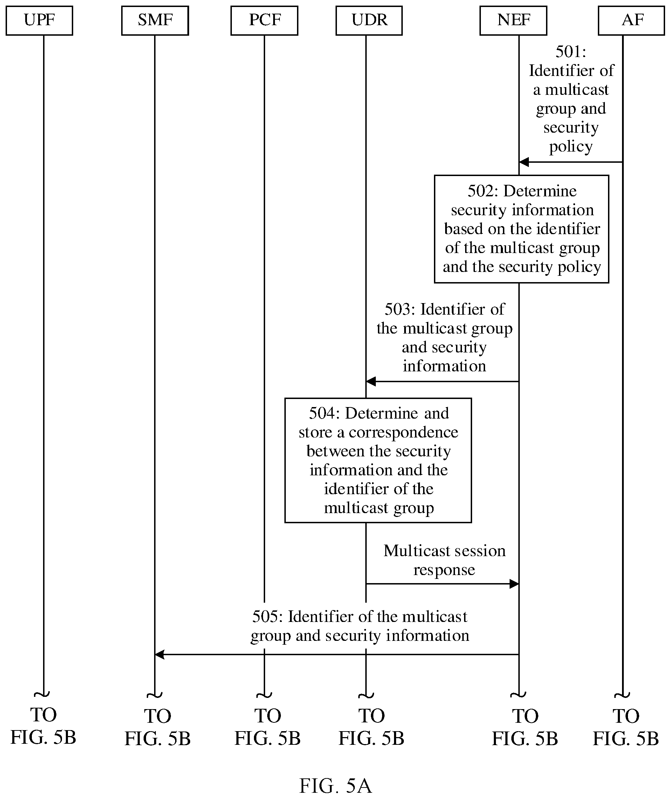

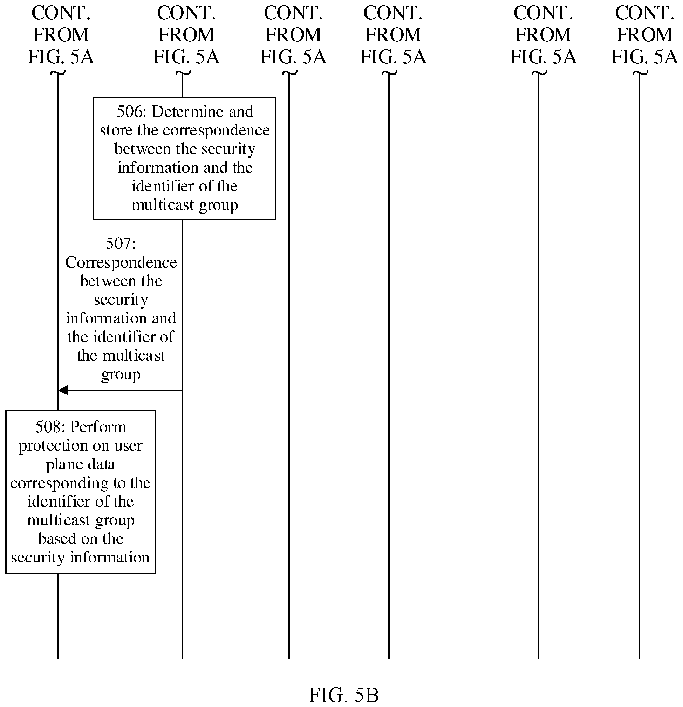

As shown in FIG. 5A and FIG. 5B, an embodiment of this application provides a security information configuration method. The method includes the following steps:
501: An AF network element sends an identifier of a multicast group to an NEF network element.

The identifier of the multicast group may be a multicast group ID (identity), or the identifier of the multicast group may be replaced with a multicast context identifier multicast context ID). The identifier of the multicast group may be used to identify a multicast service, and may also be referred to as a multicast identifier, a multicast service identifier, or the like. In the following embodiments, the identifier of the multicast group is used as an example for description. In addition, a broadcast service is similar to the multicast service. For example, the identifier of the multicast group herein may alternatively be replaced with an identifier of a broadcast group. To be specific, the following operations on the identifier of the multicast group are also applicable to the identifier of the broadcast group. In other words, a protection and negotiation procedure of the multicast service is also applicable to the broadcast service. The identifier of the multicast group herein may include an IP multicast address, and the identifier of the multicast group may further include information used to identify an application or a service, such as an identifier of the application or the service, an identifier of a network in which the application or the service is located, an identifier of an access point, an identifier of an access network, or an identifier of a data network in which the AF is located. In this embodiment of this application, the identifier of the multicast group may include a temporary mobile group identity (temporary mobile group identity, TMGI).

In some embodiments, the AF network element may further send a security policy to the NEF network element. The security policy indicates a protection requirement of user plane data of the multicast group. In other words, the security policy is used to identify a protection requirement corresponding to the identifier of the multicast group. The protection requirement may include an encryption protection requirement and/or an integrity protection requirement. The encryption protection requirement may include, for example, the "required", "preferred", or "not needed" mentioned above. The integrity protection requirement may also include, for example, the "required", "preferred", or "not needed" mentioned above.

Encryption protection may be understood as performing encryption on data by using an encryption algorithm and an encryption key, to obtain an encrypted ciphertext. A device receiving the data may decrypt the ciphertext by using a decryption key and a decryption algorithm to obtain the data. Integrity protection may be understood as performing integrity protection on data by using an integrity protection algorithm and an integrity protection key, and outputting an integrity protection check parameter. A device receiving the data and the integrity protection check parameter may check the data and the integrity protection check parameter by using an integrity protection verification key and an integrity protection algorithm, to check integrity of the data. For example, if the data is deleted or added, check of the data fails.

In some embodiments, the AF network element may send the identifier of the multicast group and the security policy to the NEF network element by using a multicast session request (multicast session request) message.

502: The NEF network element determines security information based on the identifier of the multicast group.

In some embodiments, the NEF network element determines a protection manner based on the identifier of the multicast group and the security policy.

In some embodiments, after receiving the identifier of the multicast group and the security policy, the NEF network element may first determine whether to authorize to provide a service for the identifier of the multicast group.

Examples are provided as follows: (1) the NEF network element may determine, based on a local policy of the NEF network element, whether to provide a service for the identifier of the multicast group.

(2) The NEF network element may send the identifier of the multicast group to another network element (for example, a UDM network element, a UDR network element, a PCF network element, or an MSF-C network element), to obtain subscription data corresponding to the identifier of the multicast group from the another network element, and then the NEF network element determines, based on the subscription data, whether to authorize to provide a service for the identifier of the multicast group. Optionally, the subscription data may further include the security policy corresponding to the identifier of the multicast group.

(3) The NEF network element may send the identifier of the multicast group to another network element (for example, the UDM network element, the UDR network element, the PCF network element, or the MSF-C network element), and after determining, based on the identifier of the multicast group and a local policy, whether to provide a service for the identifier of the multicast group, the another network element sends an indication to the NEF network element, to indicate whether to authorize to provide a service for the identifier of the multicast group.

If the NEF network element determines to provide a service for the identifier of the multicast group, the NEF network element may continue to determine the protection manner based on the security policy corresponding to the identifier of the multicast group. The protection manner indicates whether to perform encryption protection on the user plane data and/or whether to perform integrity protection on the user plane data.

Optionally, the security policy herein may alternatively be obtained from the AF network element, or may be obtained by requesting from the another network element. Alternatively, the security policy is determined based on the identifier of the multicast group and the local policy.

For example, if the encryption protection requirement of the security policy is "required", the NEF network element determines that the protection manner indicates to perform encryption protection on the user plane data. However, if a capability of the NEF network element does not support performing encryption protection, the NEF network element sends a notification to the AF network element, to notify the AF network element that the encryption protection cannot be performed, and rejects a multicast session establishment request of the AF network element.

If the encryption protection requirement of the security policy is "preferred", the NEF network element may determine, based on the local policy, to enable encryption protection on the user plane data or disable encryption protection on the user plane data. If the NEF network element determines to enable encryption protection on the user plane data, the NEF network element determines that the protection manner indicates to perform encryption protection on the user plane data. If the NEF network element determines to disable encryption protection on the user plane data, the NEF network element determines that the protection manner indicates not to perform encryption protection on the user plane data. Optionally, the NEF network element sends a notification to the AF network element, to notify the AF whether the encryption protection is enabled.

If the encryption protection requirement of the security policy is "not needed", the NEF network element determines that the protection manner indicates not to perform encryption protection on the user plane data.

In addition, processing for the integrity protection requirement of the security policy is similar to that for the encryption protection requirement of the security policy, and details are not described again.

Further, the NEF network element may continue to generate the security information based on the protection manner.

In some embodiments, the security information is used to perform encryption protection and/or integrity protection on the user plane data of the multicast group, and the security information includes an encryption key k1 and an encryption algorithm a1 and/or an integrity protection key k2 and an integrity protection algorithm a2.

For example, if the protection manner indicates to perform encryption protection on the user plane data, the NEF network element determines k1 and a1. If the protection manner indicates not to perform encryption protection on the user plane data, the NEF network element does not need to determine k1 and a1.

If the protection manner indicates to perform integrity protection on the user plane data, the NEF network element determines k2 and a2. If the protection manner indicates not to perform integrity protection on the user plane data, the NEF network element does not need to determine k2 and a2.

In some embodiments, there may be a plurality of manners in which the NEF network element generates k1 and k2 based on the protection manner. For example, the NEF network element may directly generate k1 and k2 based on the protection manner. Alternatively, the NEF network element may request another network element to generate k1 and k2 based on the protection manner and return the generated k1 and k2 to the NEF network element. This is not limited in this application.

In some embodiments, there may also be a plurality of manners in which the NEF network element generates a1 and a2 based on the protection manner. For example, the NEF network element may directly generate a1 and a2 based on the protection manner. Alternatively, the NEF network element may request another network element to generate a1 and a2 based on the protection manner and return the generated a1 and a2 to the NEF network element. This is not limited in this application. In some embodiments, if the protection manner indicates not to perform encryption protection on the user plane data, a1 may be a null algorithm. If the protection manner indicates not to perform integrity protection on the user plane data, a2 may be a null algorithm.

In some embodiments, if the protection manner indicates not to perform encryption protection on the user plane data and not to perform integrity protection on the user plane data, the NEF network element may also generate a1, a2, k1, and k2, but both a1 and a2 are null algorithms.

In some embodiments, the NEF network element may further select an SMF, and a manner of selecting the SMF is not limited. Optionally, the SMF herein may be an SMF function network element dedicated to the multicast or broadcast service.

503: The NEF network element sends the identifier of the multicast group and the security information to the UDR network element.

In some embodiments, if the protection manner determined in step 502 indicates to perform encryption protection and integrity protection on the user plane data, the security information sent in step 503 includes a1, a2, k1, and k2.

If the protection manner determined in step 502 indicates to perform encryption protection on the user plane data and indicates not to perform integrity protection on the user plane data, the security information sent in step 503 may include k1 and a1, but does not include k2 and/or a2. Even if k2 or a2 is included, k2 and a2 are null.

If the protection manner determined in step 502 indicates not to perform encryption protection on the user plane data and indicates to perform integrity protection on the user plane data, the security information sent in step 503 may include k2 and a2, but does not include k1 and/or a1. Even if k1 or a2 is included, k1 and a1 are null.

In some embodiments, the security information may further include the protection manner.

In some embodiments, the security information may further include the security policy.

In some embodiments, the security information may further include an SMF ID, and the SMF ID is an ID of the SMF selected by the NEF network element.

In some embodiments, the NEF network element may send the identifier of the multicast group and the security information to the UDR network element or another NF network element by using a multicast session request message. The following steps are described by using an example in which the UDR network element receives the multicast session request message.

504: The UDR network element determines and stores a correspondence between the security information and the identifier of the multicast group.

In some embodiments, when the security information received by the UDR network element further includes the ID of the SMF, the UDR network element may further store the ID of the SMF. The UDR network element may further send a multicast session response (multicast session response) message to the NEF network element, to indicate that the security information and the identifier of the multicast group are received.

505: The NEF network element sends the identifier of the multicast group and the security information to the SMF network element.

In some embodiments, the NEF network element may send the identifier of the multicast group and the security information by using a multicast distribution request (multicast distribution request) message.

In some embodiments, the NEF network element may further send a policy authorization request to the PCF network element, and the PCF network element sends a policy authorization response to the NEF network element.

506: The SMF network element determines and stores the correspondence between the security information and the identifier of the multicast group.

In some embodiments, when receiving the correspondence, the SMF network element may send a multicast configuration session response (multicast distribution session response) message to the NEF network element, where the message may further carry an ingress address (ingress address) of a UPF network element.

In some embodiments, the NEF network element may further send a multicast session response message to the AF network element, where the message may carry an ingress address of the NEF network element, and may further carry the protection manner.

The AF network element may store the protection manner. If determining that the protection manner needs to be updated, the AF network element may further adjust the security policy based on the protection manner, and re-initiate a method procedure in this embodiment based on the adjusted security policy.

In some embodiments, the SMF network element may further send an MBS policy negotiation request (policy association request) message to the PCF network element, and then the PCF network element sends an MBS policy negotiation response (MBS policy association response) message to the SMF network element.

507: The SMF network element sends the correspondence between the security information and the identifier of the multicast group to the UPF network element.

In some embodiments, the SMF network element may send the correspondence to the UPF network element by using a session request (session request) message. Correspondingly, the UPF network element may feed back a session response (session response) message to the SMF network element, to indicate that the correspondence is received. The session response herein may include the ingress address of the UPF network element.

508: The UPF network element performs protection on the user plane data corresponding to the identifier of the multicast group based on the security information.

When the AF network element subsequently sends downlink user plane data, the AF network element directly sends the user plane data to the UPF network element. Therefore, when the UPF network element stores the security information, the UPF network element may determine, based on the security information, how to perform encryption protection and integrity protection on the user plane data. Then, the UPF network element may send, to UE through a RAN network element, the user plane data on which encryption protection and integrity protection are performed.

In some embodiments, if the security information includes k1 and a1, or the protection manner indicates that encryption protection needs to be performed on the user plane data, the UPF network element performs encryption protection on the received user plane data based on k1 and a1.

If the security information includes k2 and a2, or the protection manner indicates that integrity protection needs to be performed on the user plane data, the UPF network element performs integrity protection on the received user plane data based on k2 and a2.

If the security information does not include k1 and a1, or the protection manner indicates that encryption protection does not need to be performed on the user plane data, the UPF network element skips performing encryption protection on the received user plane data.

If the security information does not include k2 and a2, or the protection manner indicates that integrity protection does not need to be performed on the user plane data, the UPF network element does not perform integrity protection on the user plane data.

In other words, if the security information includes k1 and k1 is not a null algorithm, the UPF network element performs encryption protection on the user plane data based on k1. If the security information includes k2 and k2 is not a null algorithm, the UPF network element performs integrity protection on the user plane data based on k2.

If the security information includes k1 and k1 is a null algorithm, the UPF network element does not perform encryption protection on the user plane data. If the security information includes k2 and k2 is a null algorithm, the UPF network element does not perform integrity protection on the user plane data.

In some embodiments, if the protection manner indicates that encryption protection or integrity protection needs to be performed, but the UPF network element currently does not support enabling encryption protection, the UPF network element sends a rejection message to the SMF network element. In some embodiments, the SMF network element may reject establishment of a multicast session, and send a rejection message to the NEF network element. The NEF network element may send a rejection message to the AF network element, where the rejection message indicates that establishment of the multicast session is rejected. Alternatively, the SMF network element may reselect a UPF network element, and perform steps starting from step 507 again.

In some embodiments, if the UE newly joining the multicast group subsequently expects to obtain the security information, the UE may request the security information from the SMF network element through the RAN network element and an AMF network element. Alternatively, the UE may request the security information from the SMF network element through the RAN network element and the UPF network element. If the SMF network element stores the correspondence, the SMF network element may send the security information to the UE. If the SMF network element does not store the correspondence, the SMF network element may request the security information from the UDR network element or the PCF network element and then deliver the security information to the UE. In this way, the UE decrypts the received user plane data based on the security information.

It should be noted that step 502 further includes another possibility: The NEF network element does not determine the protection manner. After obtaining, from another network element, an algorithm and a key that are determined by the another network element, the NEF network element sends the algorithm and the key to the UDR network element. Then, the NEF network element may further send the security policy to the SMF network element, and the SMF network element may determine the protection manner based on the security policy. Alternatively, the SMF network element sends the security policy to the UPF network element, and the UPF network element determines the protection manner and then sends the protection manner to the SMF network element. The SMF network element may further send the protection manner to the NEF network element, and then the NEF network element stores the protection manner in the UDR network element. An advantage of the foregoing manner is that the UPF network element that finally performs encryption protection and integrity protection determines whether to enable encryption protection or integrity protection.

In some embodiments, the procedure of configuring the security information does not require actions of processing the security policy and the protection manner, and includes only actions of determining, by the NEF network element, the encryption key and the encryption algorithm and the integrity protection key and the integrity protection algorithm, and subsequently storing and transferring the encryption key and the encryption algorithm.

Therefore, the method procedure provided in this embodiment of this application is applicable to a procedure of configuring security information in a 5G MBS service. The foregoing embodiment mainly provides a description that the security information is stored in the UDR network element after being determined by the NEF network element.

### Embodiment 2

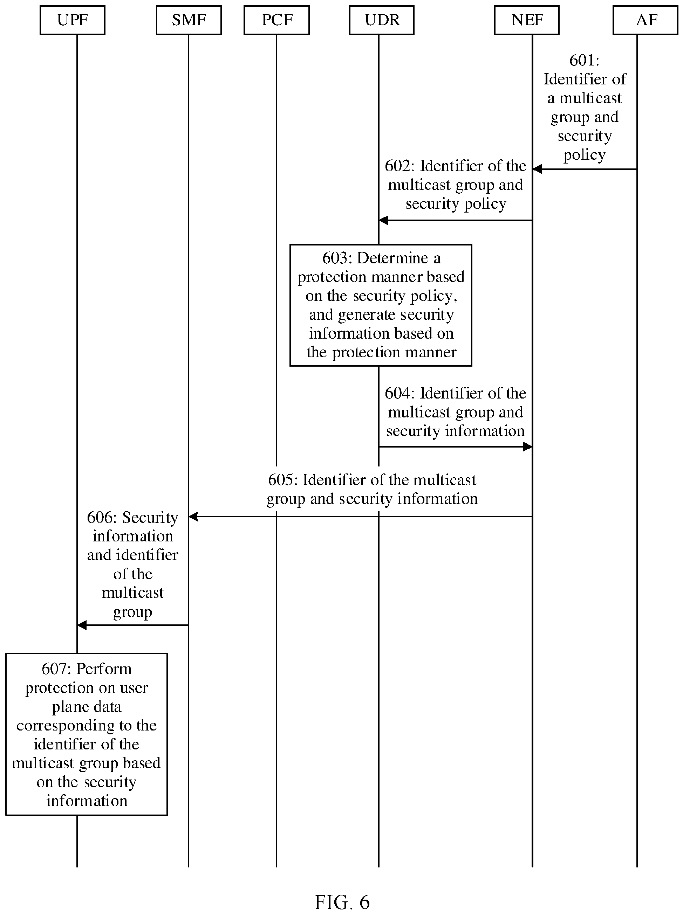

As shown in FIG. 6, an embodiment of this application further provides a security information configuration method. The method includes the following steps:
601: An AF network element sends an identifier of a multicast group to an NEF network element.

In some embodiments, the AF network element may further send a security policy corresponding to the identifier of the multicast group to the NEF network element.

For an implementation of step 601, refer to the implementation of step 501.

602: The NEF network element sends the identifier of the multicast group to a UDR network element.

In some embodiments, the NEF network element may further send the security policy to the UDR network element.

603: The UDR network element determines, based on the security policy, a protection manner corresponding to the identifier of the multicast group, and generates security information corresponding to the identifier of the multicast group based on the protection manner.

The security policy in step 603 may be received by the UDR network element from another network element (for example, the NEF network element), or may be locally determined by the UDR network element based on the identifier of the multicast group.

In some embodiments, the UDR network element may alternatively send the security policy to another network element. The another network element generates the security information based on the security policy, and then sends the security information to the UDR network element.

For an implementation in which the UDR determines the protection manner based on the identifier of the multicast group and the security policy, refer to the implementation of the NEF network element in step 602.

604: The UDR network element sends the identifier of the multicast group and the security information to the NEF network element.

605: The NEF network element sends the identifier of the multicast group and the security information to an SMF network element.

606: The SMF network element sends the identifier of the multicast group and the security information to a UPF network element.

607: The UPF network element performs protection on user plane data corresponding to the identifier of the multicast group based on the security information.

The UPF network element may perform encryption protection and/or integrity protection on the user plane data of the multicast group based on the security information. For details, refer to the implementation of step 508.

Similar to Embodiment 1, UE newly joining the multicast group may request the security information from the SMF network element. If the SMF network element stores a correspondence, the SMF network element may send the security information to the UE. If the SMF network element does not store the correspondence, the SMF network element may request the security information from the UDR network element or a PCF network element, and then deliver the security information to the UE. In this way, the UE decrypts the received user plane data based on the security information.

### Embodiment 3

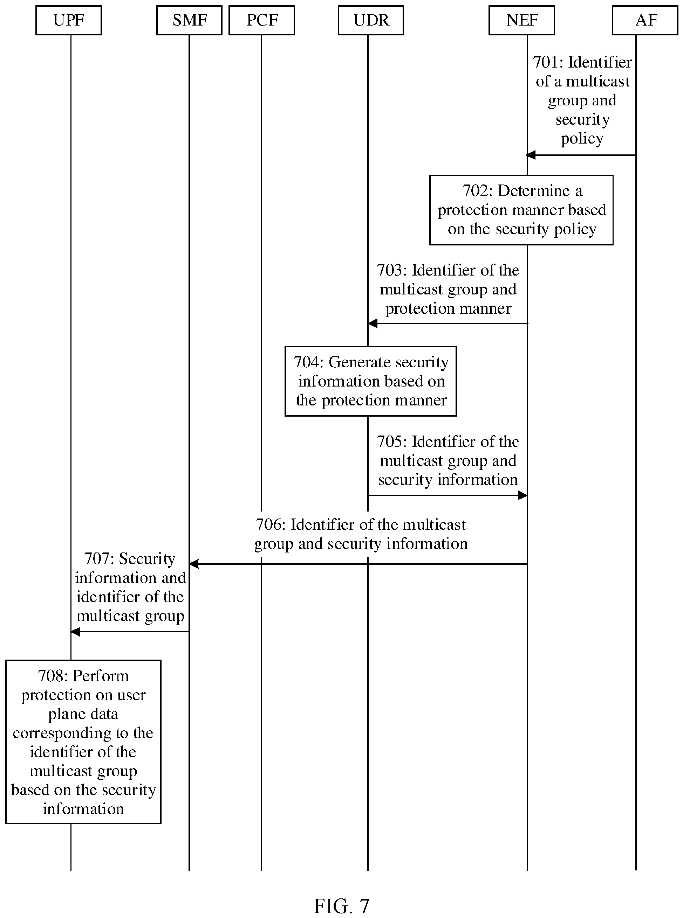

As shown in FIG. 7, an embodiment of this application further provides a security information configuration method. The method includes the following steps:
701: An AF network element sends an identifier of a multicast group to an NEF network element.

In some embodiments, the AF network element may further send a security policy corresponding to the identifier of the multicast group to the NEF network element.

For an implementation of step 701, refer to the implementation of step 501.

702: The NEF network element determines a protection manner corresponding to the identifier of the multicast group based on the identifier of the multicast group.

The security policy in step 702 may be received by the NEF network element from another network element (for example, the AF network element), or may be locally determined by the NEF network element based on the identifier of the multicast group.

For an implementation of step 702, refer to the implementation of step 502.

703: The NEF network element sends the identifier of the multicast group and the protection manner to a UDR network element.

704: The UDR network element generates security information corresponding to the identifier of the multicast group based on the protection manner.

For an implementation in which the UDR determines the protection manner based on the identifier of the multicast group and the security policy, refer to the implementation of the NEF network element in step 602.

705: The UDR network element sends the identifier of the multicast group and the security information to the NEF network element.

706: The NEF network element sends the identifier of the multicast group and the security information to an SMF network element.

707: The SMF network element sends the identifier of the multicast group and the security information to a UPF network element.

708: The UPF network element performs protection on user plane data corresponding to the identifier of the multicast group based on the security information.

For an implementation of step 708, refer to the implementation of step 508.

It may be understood that, in this embodiment, the NEF network element determines the protection manner, and the UDR network element generates the security information based on the protection manner, and sends the security information to another NF network element to perform protection on user plane data of an MBS, so as to ensure security of user plane data of a 5G MBS.

### Embodiment 4

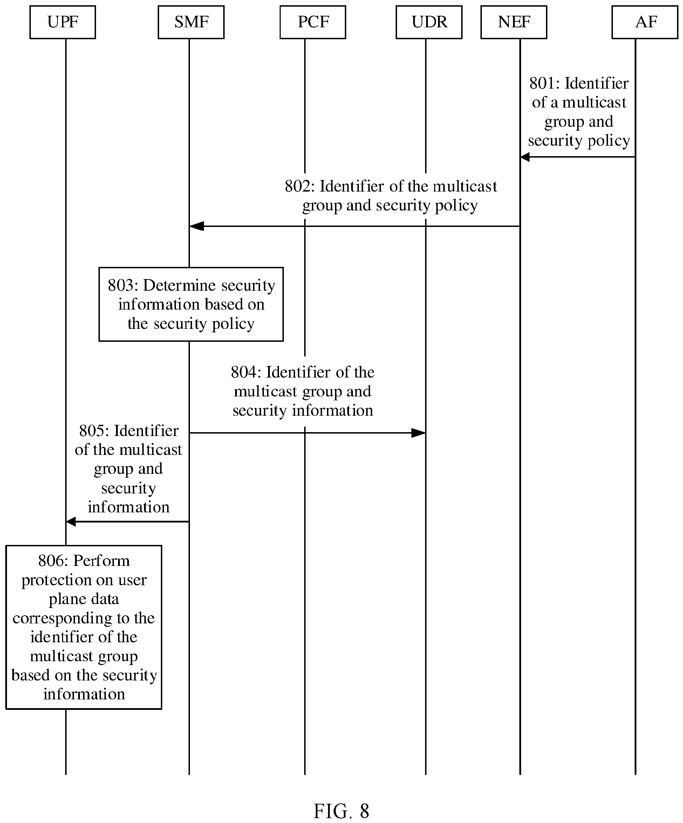

As shown in FIG. 8, an embodiment of this application further provides a security information configuration method. The method includes the following steps:
801: An AF network element sends an identifier of a multicast group to an NEF network element.

In some embodiments, the AF network element may further send a security policy corresponding to the identifier of the multicast group to the NEF network element.

For an implementation of step 801, refer to the implementation of step 501.

802: The NEF network element sends the identifier of the multicast group to an SMF network element.

In some embodiments, the NEF network element may further send the security policy corresponding to the identifier of the multicast group to the SMF network element.

803: The SMF network element determines security information corresponding to the identifier of the multicast group based on the security policy.

The security policy in step 803 may be received by the SMF network element from the NEF network element, or may be locally generated by the SMF network element based on the identifier of the multicast group.

For an implementation in which the SMF network element determines the security information based on the security policy, refer to the implementation of the NEF network element in step 502.

Alternatively, the SMF network element may generate a protection manner based on the security policy, and send the protection manner and the identifier of the multicast group to the NEF network element. The NEF network element generates the security information based on the protection manner and feeds back the security information to the SMF network element.

804: The SMF network element sends the identifier of the multicast group and the security information to a UDR network element.

In some embodiments, the SMF network element may further send the identifier of the multicast group and the security information to a PCF network element.

805: The SMF network element sends the identifier of the multicast group and the security information to a UPF network element.

806: The UPF network element performs protection on user plane data corresponding to the identifier of the multicast group based on the security information.

For an implementation of step 806, refer to the implementation of step 508.

It may be understood that, in this embodiment, the SMF network element may generate the security information and send the security information to another NF network element to perform protection on user plane data of an MBS, so as to ensure security of user plane data of a 5G MBS.

### Embodiment 5

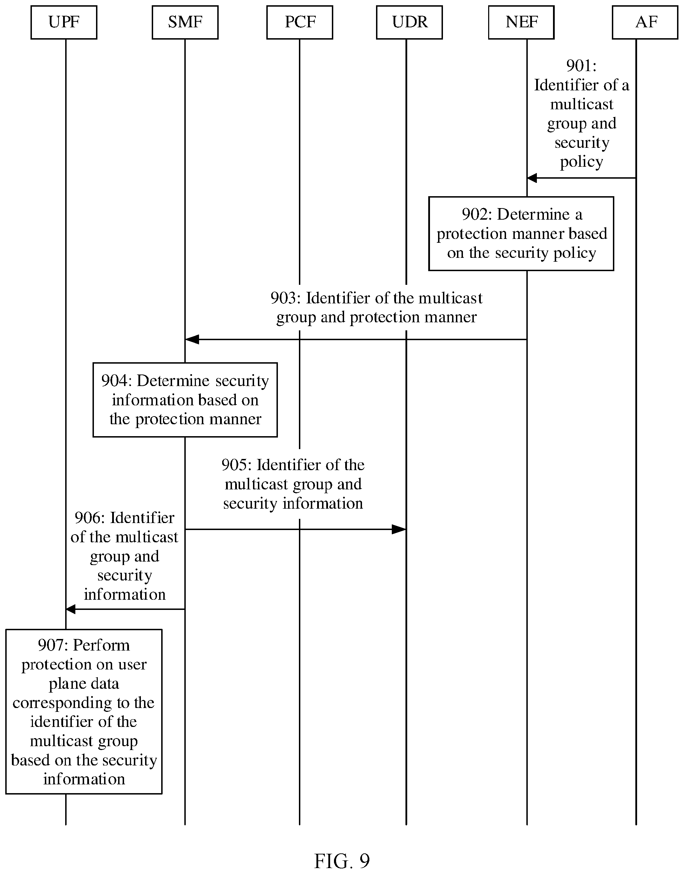

As shown in FIG. 9, an embodiment of this application further provides a security information configuration method. The method includes the following steps:
901: An AF network element sends an identifier of a multicast group to an NEF network element.

In some embodiments, the AF network element may further send a security policy corresponding to the identifier of the multicast group to the NEF network element.

For an implementation of step 801, refer to the implementation of step 501.

902: The NEF network element determines a protection manner corresponding to the identifier of the multicast group based on the security policy.

The security policy in step 902 may be received by the NEF network element from the AF network element, or may be locally generated by the NEF network element based on the identifier of the multicast group.

For an implementation in which the NEF network element determines the protection manner based on the security policy, refer to the implementation of the NEF network element in step 502.

903: The NEF network element sends the identifier of the multicast group and the protection manner to an SMF network element.

904: The SMF network element generates security information corresponding to the identifier of the multicast group based on the protection manner.

For an implementation in which the SMF network element generates the security information based on the protection manner, refer to the implementation of the NEF network element in step 502.

905: The SMF network element sends the identifier of the multicast group and the security information to a UDR network element.

In some embodiments, the SMF network element may further send the identifier of the multicast group and the security information to a PCF network element.

906: The SMF network element sends the identifier of the multicast group and the security information to a UPF network element.

907: The UPF network element performs protection on user plane data corresponding to the identifier of the multicast group based on the security information.

For an implementation of step 907, refer to the implementation of step 508.

It may be understood that, in this embodiment, the NEF network element may determine the protection manner, and the SMF network element generates the security information based on the protection manner, and sends the security information to another NF network element to perform protection on user plane data of an MBS, so as to ensure security of user plane data of a 5G MBS.

Implementations of Embodiment 1 to Embodiment 5 are applicable to the foregoing architecture 1.

### Embodiment 6

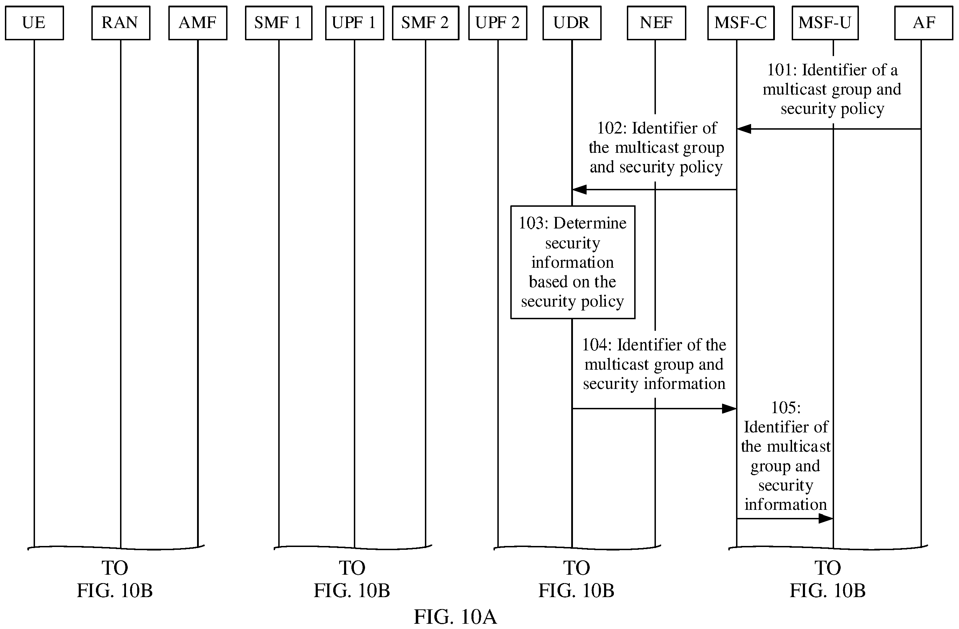

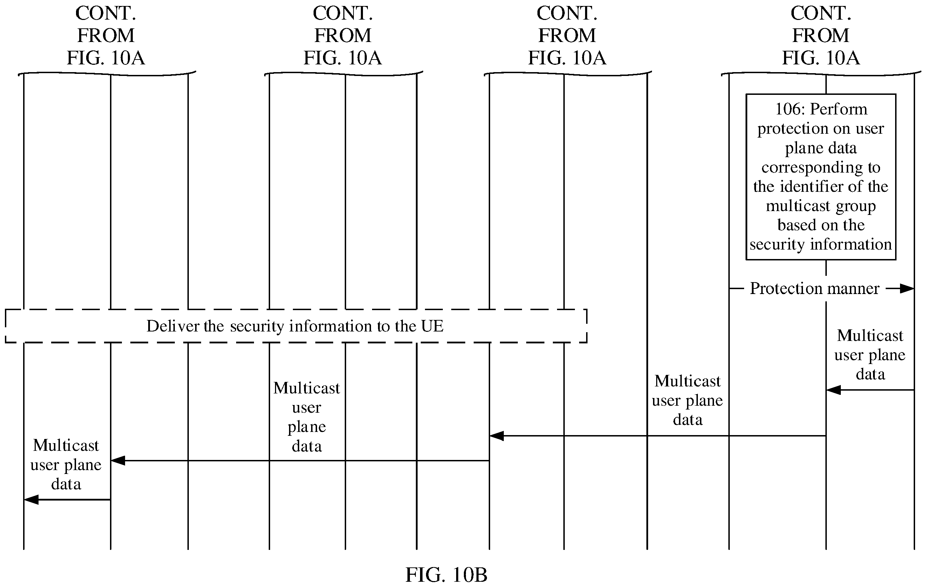

As shown in FIG. 10A and FIG. 10B, an embodiment of this application further provides a security information configuration method. The method includes the following steps:
101: An AF network element sends an identifier of a multicast group to an MSF-C network element.

In some embodiments, the AF network element may further send a security policy corresponding to the identifier of the multicast group to the MSF-C network element.

For an implementation of step 101, refer to the implementation in which the AF network element sends the identifier of the multicast group and the security policy to the NEF network element in step 501.

102: The MSF-C network element sends the identifier of the multicast group to a UDR network element.

In some embodiments, the MSF-C network element may further send the security policy corresponding to the identifier of the multicast group to the UDR network element.

103: The UDR network element determines security information corresponding to the identifier of the multicast group based on the security policy.

In some embodiments, the security policy in step 103 may be received by the UDR network element from the MSF-C network element, or may be locally generated by the UDR network element based on the identifier of the multicast group.

For an implementation of step 103, refer to the implementation in which the NEF determines the security information in step 502.

104: The UDR network element sends the identifier of the multicast group and the security information to the MSF-C network element.

105: The MSF-C network element sends the identifier of the multicast group and the security information to an MSF-U network element.

106: The MSF-U network element performs protection on user plane data corresponding to the identifier of the multicast group based on the security information.

For an implementation of step 106, refer to the implementation of the UPF network element in step 508. For example, when receiving the user plane data of the multicast group sent by the AF network element, the MSF-U network element may perform protection on the user plane data, and then send the user plane data to a UPF 2 network element. The UPF 2 network element delivers the user plane data to UE through a RAN network element. The UE may decrypt the user plane data based on the security information obtained through requesting from the UDR network element.

In some embodiments, the MSF-C network element may further send a protection manner to the AF network element.

It may be understood that, in this embodiment, the UDR network element may generate the security information based on the security policy received from the MSF-C network element, and send the security information to another NF network element to perform protection on user plane data of an MBS, so as to ensure security of user plane data of a 5G MBS.

### Embodiment 7

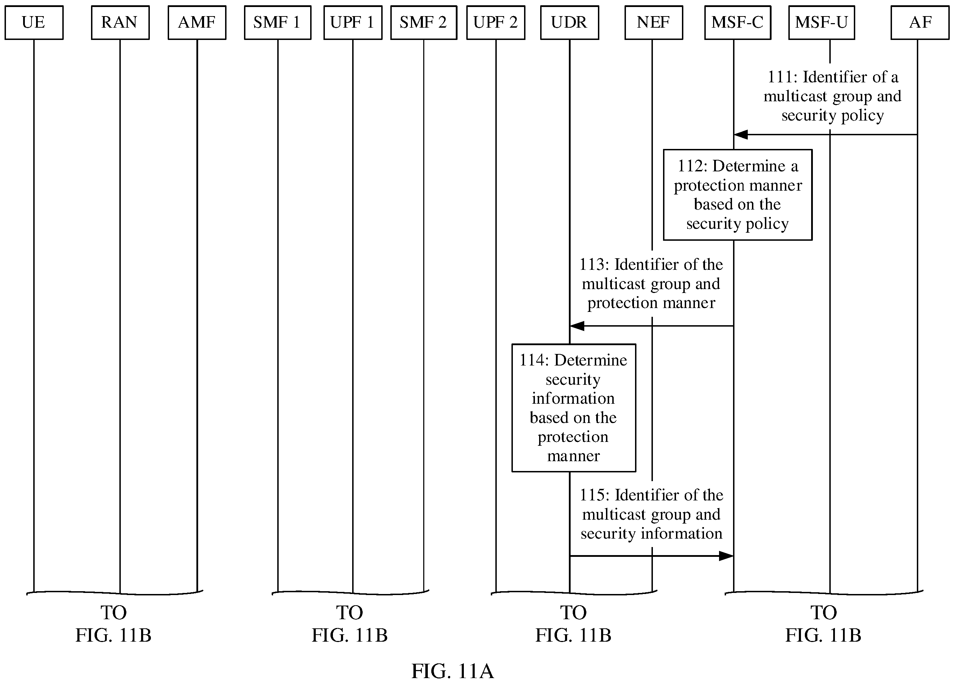

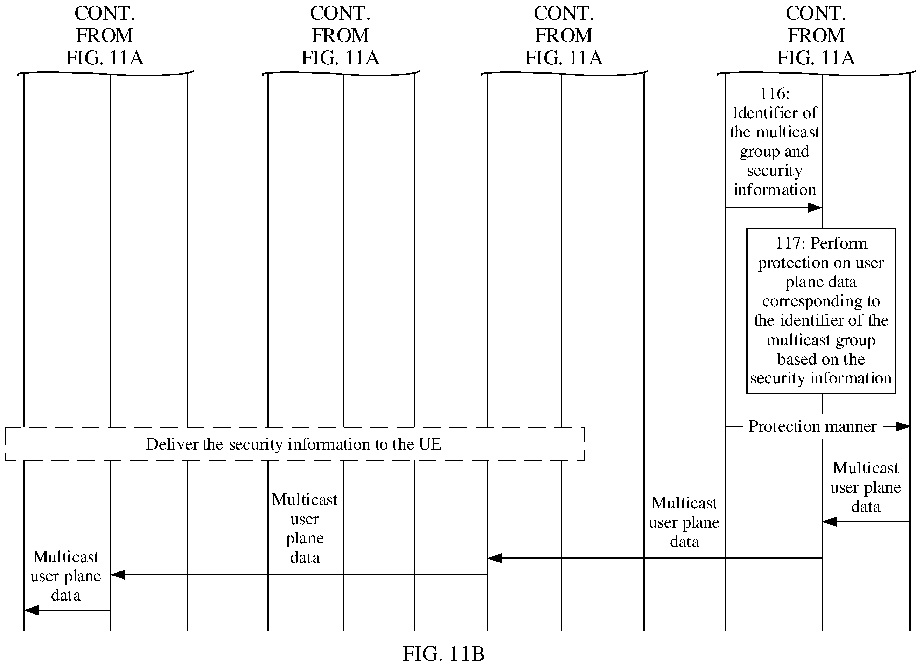

As shown in FIG. 11A and FIG. 11B, an embodiment of this application further provides a security information configuration method. The method includes the following steps:
111: An AF network element sends an identifier of a multicast group to an MSF-C network element.

In some embodiments, the AF network element may further send a security policy corresponding to the identifier of the multicast group to the MSF-C network element.

For an implementation of step 101, refer to the implementation in which the AF network element sends the identifier of the multicast group and the security policy to the NEF network element in step 501.

112: The MSF-C network element determines a protection manner corresponding to the identifier of the multicast group.

In some embodiments, the security policy in step 112 may be received by the MSF-C network element from the AF network element, or may be locally generated by the MSF-C network element based on the identifier of the multicast group.

For an implementation of step 112, refer to the implementation in which the NEF network element determines the protection manner in step 502.

113: The MSF-C network element sends the identifier of the multicast group and the protection manner to a UDR network element.

114: The UDR network element determines security information corresponding to the identifier of the multicast group based on the protection manner.

For an implementation of step 114, refer to the implementation in which the NEF network element determines the security information in step 502.

115: The UDR network element sends the identifier of the multicast group and the security information to the MSF-C network element.

116: The MSF-C network element sends the identifier of the multicast group and the security information to an MSF-U network element.

117: The MSF-U network element performs protection on user plane data corresponding to the identifier of the multicast group based on the security information.

It may be understood that, in this embodiment, the MSF-C network element may determine the protection manner corresponding to the identifier of the multicast group, and the UDR network element generates the security information based on the protection manner received from the MSF-C network element, and sends the security information to another NF network element to perform protection on user plane data of an MBS, so as to ensure security of user plane data of a 5G MBS.

### Embodiment 8

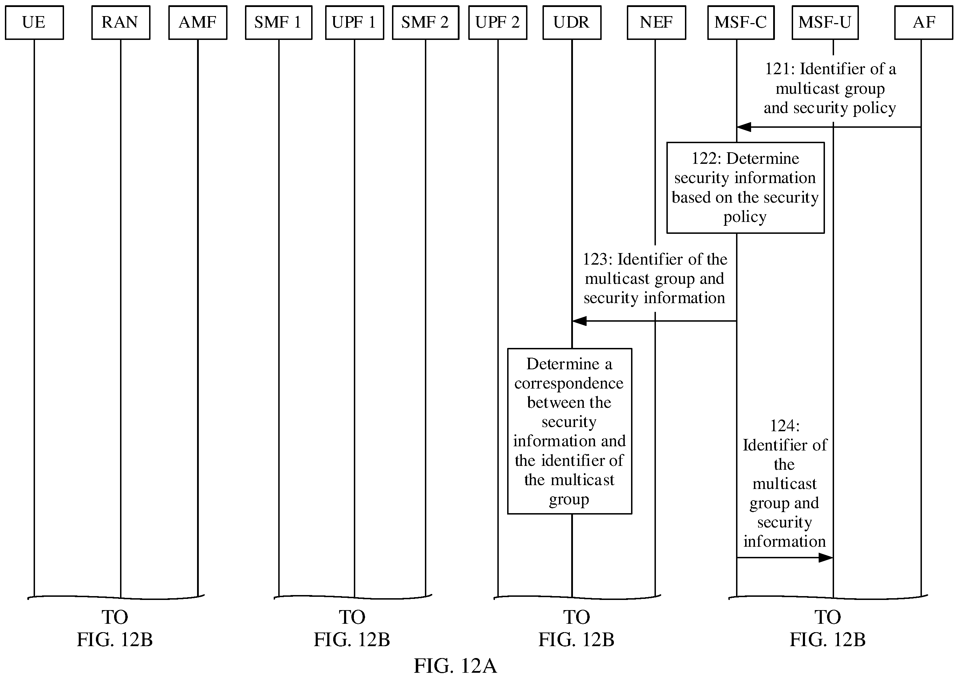

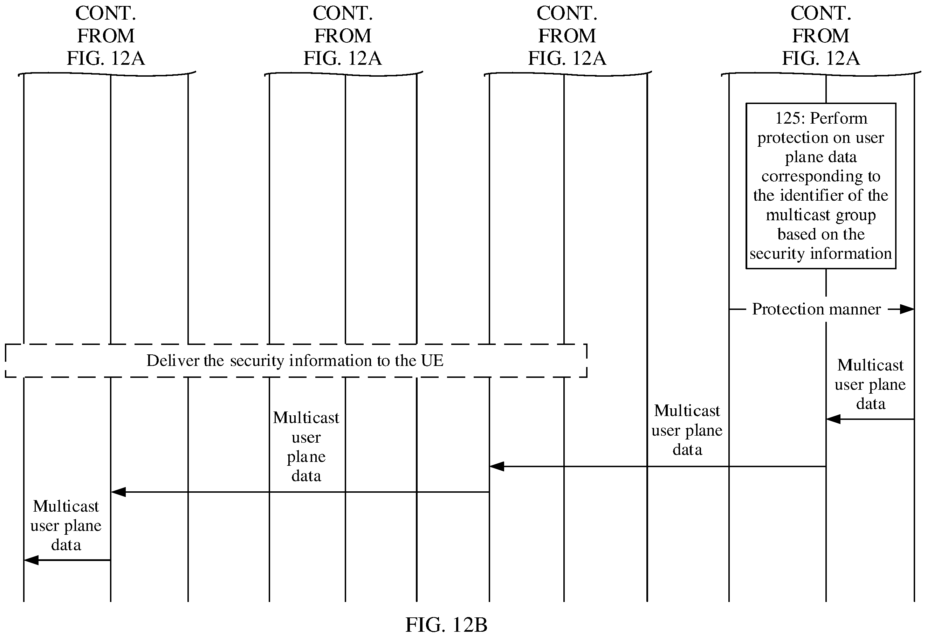

As shown in FIG. 12A and FIG. 12B, an embodiment of this application further provides a security information configuration method. The method includes the following steps:
121: An AF network element sends an identifier of a multicast group to an MSF-C network element.

In some embodiments, the AF network element may further send a security policy corresponding to the identifier of the multicast group to the MSF-C network element.

For an implementation of step 101, refer to the implementation in which the AF network element sends the identifier of the multicast group and the security policy to the NEF network element in step 501.

122: The MSF-C network element determines security information corresponding to the identifier of the multicast group based on the security policy.

In some embodiments, the security policy in step 122 may be received by the MSF-C network element from the AF network element, or may be locally generated by the MSF-C network element based on the identifier of the multicast group.

For an implementation of step 122, refer to the implementation in which the NEF network element determines the security information in step 502.

123: The MSF-C network element sends the identifier of the multicast group and the security information to a UDR network element.

124: The MSF-C network element sends the identifier of the multicast group and the security information to an MSF-U network element.

125: The MSF-U network element performs protection on user plane data corresponding to the identifier of the multicast group based on the security information.

It should be noted that the MSF-U network element is optional. If the MSF-C network element determines not to perform protection, the MSF-C network element may not select the MSF-U.

It may be understood that, in this embodiment, the MSF-C network element may determine the security information corresponding to the identifier of the multicast group, and send the security information to another NF network element to perform protection on user plane data of an MBS, so as to ensure security of user plane data of a 5GMBS.

In Embodiment 6 to Embodiment 8, the MSF-C network element may alternatively send the identifier of the multicast group and the security information to an SMF network element or a PCF network element. The SMF network element or the PCF network element stores the security information. When subsequently requesting the security information, UE may request the security information from the SMF network element or the PCF network element. Certainly, the security information may alternatively be requested from the UDR network element.

### Embodiment 9

Embodiment 9 describes a plurality of possible implementations of obtaining security information when UE joins a service procedure corresponding to an identifier of a multicast group.

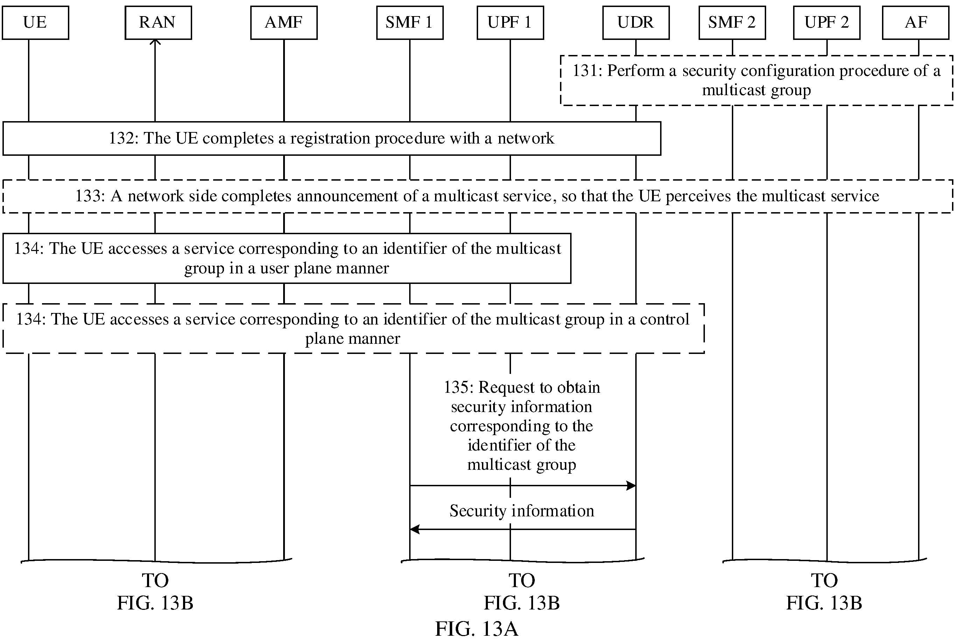

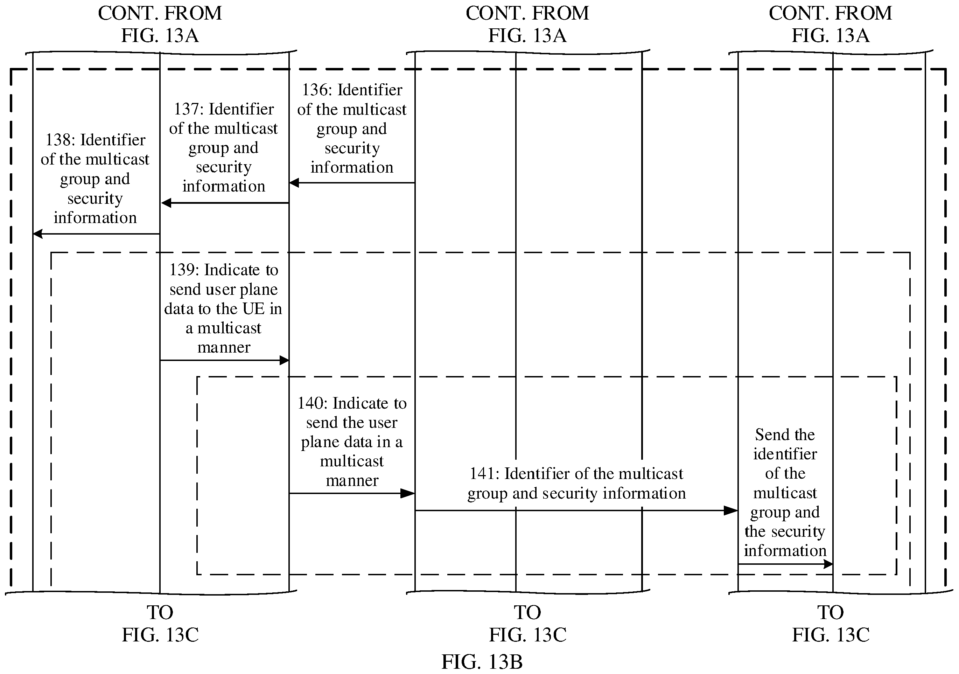

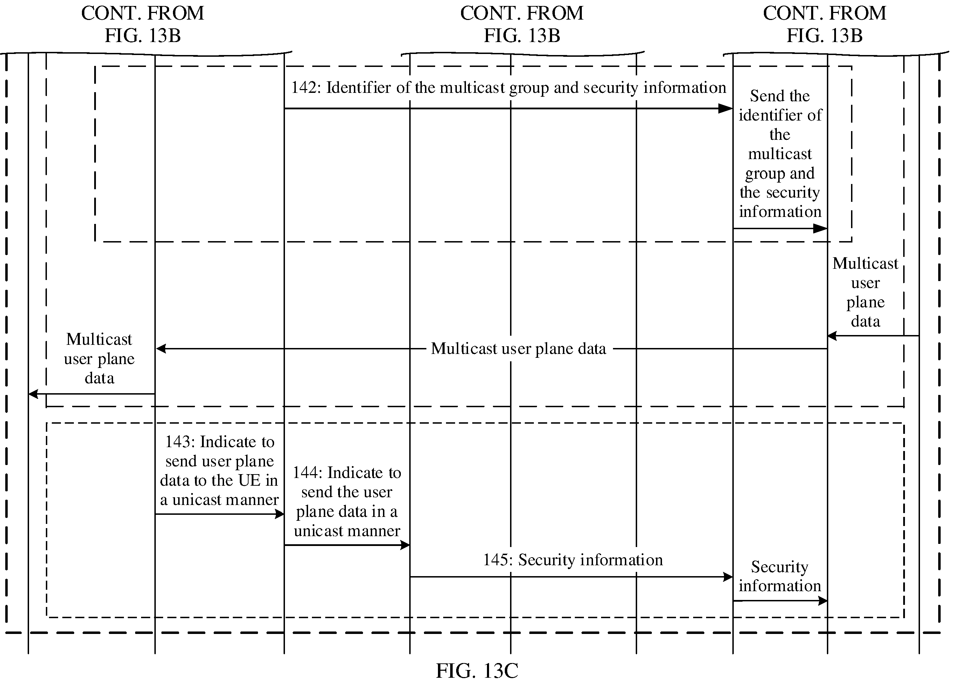

As shown in FIG. 13A to FIG. 13C, an embodiment of this application further provides a security information configuration method. The method includes the following steps:
131: An AF network element performs a security configuration procedure of the multicast group.

For example, for the security configuration procedure, refer to the configuration procedure in any one of Embodiment 1 to Embodiment 8.

In some embodiments, step 131 is optional. To be specific, a network side has completed the security configuration procedure. For example, a UDR network element stores a correspondence between the identifier of the multicast group and the security information. Alternatively, the network side has not completed the security configuration procedure, in other words, has not performed the configuration procedure in the foregoing embodiment.

The AF network element may alternatively be replaced with a context provider (content provider, CP) network element.

132: The UE completes a registration procedure with a network.

In some embodiments, the UE may complete a session establishment procedure with the network.

133: The network side completes announcement of a multicast service, so that the UE perceives the multicast service.

Step 133 is optional.

134: The UE accesses a service corresponding to the identifier of the multicast group in a user plane manner or a control plane manner.

An objective of step 134 is that an SMF 1 network element determines the identifier of the multicast group that the UE expects to access. Specifically, determining may be performed based on multicast group information sent by the UE in the user plane manner, such as an internet group management protocol (internet group management protocol, IGMP) packet, a multicast address, an identifier of a network in which the multicast service or an application is located, an identifier of the multicast service/application, or the identifier of the multicast group. Alternatively, determining may be performed based on multicast group information sent by the UE in the control plane manner, such as the multicast address, the identifier of the network in which the multicast service or the application is located, the identifier of the multicast service/application, or the identifier of the multicast group.

A manner in which the SMF 1 determines the multicast group information, for example, the identifier of the multicast group, is not limited herein. It is assumed that the SMF 1 network element determines the identifier of the multicast group that the UE expects to access. In this case, the method further includes the following steps:
135: The SMF 1 network element requests to obtain the security information corresponding to the identifier of the multicast group.

In some embodiments, the SMF 1 may send a multicast request message to the UDR network element, where the message carries the identifier of the multicast group, to request to obtain the security information corresponding to the identifier of the multicast group. When the UDR network element stores the security information, the UDR network element may send the security information to the SMF 1 network element by using a multicast response message.

In some embodiments, if the security information is stored in a PCF network element, the SMF 1 network element may alternatively request to obtain the security information from the PCF network element.

In some embodiments, the SMF network element may determine information such as an address of the multicast group, and send the information about the address of the multicast group to the UDR network element. The UDR network element determines, based on the information about the address, whether there is corresponding security information.

Optionally, the multicast group information sent by the UE may be the identifier, the address, or the like of the multicast group, and the multicast group information determined by the SMF may be the identifier, the address, or the like of the multicast group. The multicast group information may be different from the identifier of the multicast group sent by the AF in Embodiment 1, but the multicast group information and the identifier of the multicast group sent by the AF in Embodiment 1 are associated. For example, the multicast address, the identifier of the network, or the like in the multicast group information may be consistent with the identifier of the multicast group or the identifier of the network in the identifier of the multicast group sent by the AF. An association manner is not limited herein. The UDR may determine, based on the multicast group information sent by the SMF, whether the identifier in the multicast group information matches the identifier of the multicast group previously received from an NEF.

136: The SMF 1 network element sends the identifier of the multicast group and the security information to an AMF network element.

For example, the SMF 1 network element may send the identifier of the multicast group and the security information to the AMF network element by using a Namf_Communication_N1N2Message Transfer message.

In some embodiments, the SMF 1 may send only the security information to the AMF.

137: The AMF network element sends the identifier of the multicast group and the security information to a RAN network element.

For example, the AMF network element may send the identifier of the multicast group and the security information to the RAN network element by using an N2 session request message.

In some embodiments, the AMF network element may send only the security information to the RAN network element.

138: The RAN network element sends the identifier of the multicast group and the security information to the UE.

In some embodiments, the RAN network element may send the identifier of the multicast group and the security information to the UE by using a PDU session modification/accept (PDU session modification/accept) message.

In some embodiments, the RAN network element may send only the security information to the UE.

In some embodiments, the PDU session modification/accept message may alternatively be a message sent by the SMF 1 network element to the UE through the AMF network element and the RAN network element. The message is encapsulated in a Namf_Communication_N1N2Message Transfer_N2 session request and sent to the UE by using an RRC message.

In some embodiments, the RAN network element may further modify an access network resource based on the identifier of the multicast group and the security information.

Therefore, when receiving user plane data of the service corresponding to the identifier of the multicast group, the UE may decrypt the received user plane data based on the security information and the identifier of the multicast group.

Step 139 or step 143 is optionally performed subsequently.

139: The RAN network element sends an N2 session response message to the AMF network element, where the message is used to indicate to send the user plane data to the UE in a multicast manner. Then, step 140 or step 142 may continue to be performed.

140: The AMF network element sends an N11 session response message to the SMF 1 network element, where the message is used to indicate to send the user plane data in a multicast manner.

In some embodiments, if the RAN network element selects the multicast manner to send the user plane data to the UE, when the SMF 1 network element receives the N11 session response message, the method further includes the following step:
141: The SMF 1 network element sends the identifier of the multicast group and the security information to an SMF 2 network element, the SMF 2 network element sends the identifier of the multicast group and the security information to a UPF 2 network element, and the UPF 2 network element performs protection on the user plane data of the multicast group; or the SMF 1 network element sends the identifier of the multicast group and the security information to the SMF 2 network element, the SMF 2 network element sends the identifier of the multicast group and the security information to an MSF-U network element, and the MSF-U network element performs protection on the user plane data of the multicast group (not shown in FIG. 13A to FIG. 13C).

142: The AMF network element sends the identifier of the multicast group and the security information to the SMF 2 network element, the SMF 2 network element sends the identifier of the multicast group and the security information to the UPF 2 network element or the MSF-U network element, and the UPF 2 network element or the MSF-U network element performs protection on the user plane data of the multicast group; or the AMF network element sends the identifier of the multicast group and the security information to an MSF-C network element, the MSF-C network element sends the identifier of the multicast group and the security information to the MSF-U network element, and the MSF-U network element performs protection on the user plane data of the multicast group (not shown in FIG. 13 A to FIG. 13C).

143: The RAN network element sends an N2 session response message to the AMF network element, where the message is used to indicate to send the user plane data to the UE in a unicast manner.

144: The AMF network element sends an N11 session response message to the SMF 1 network element, where the message is used to indicate to send the user plane data in a unicast manner.

145: The SMF 1 network element sends the identifier of the multicast group and the security information to an SMF 2 network element, the SMF 2 network element sends the identifier of the multicast group and the security information to a UPF 2 network element or an MSF-U network element, and the UPF 2 network element or the MSF-U network element performs protection on the unicast user plane data; or the SMF 1 network element sends the identifier of the multicast group and the security information to an MSF-C network element, the MSF-C network element sends the identifier of the multicast group and the security information to the MSF-U network element, and the MSF-U network element performs protection on the unicast user plane data.

It should be noted that, in step 135, the security information may be obtained by the SMF 1 network element by requesting from the UDR network element when the UDR network element stores the security information. In other words, step 135 is an operation performed after the network side performs the security configuration procedure in step 131. However, if step 131 is not performed, that is, the security configuration procedure is not completed, the implementation of step 135 may be replaced with the following step (where a replacement step of step 135 is not shown in FIG. 13A to FIG. 13C):
135a: The SMF 1 network element determines the security information corresponding to the identifier of the multicast group, and sends the security information to the UDR network element, so that the UDR stores the correspondence between the identifier of the multicast group and the security information.

Subsequently, if the UE accesses the multicast group through the SMF 1 network element, the SMF 1 network element may still obtain the security information from the UDR network element and send the security information to the UE.

Alternatively, the implementation of step 135 is replaced with the following step:
135b: The SMF 1 network element sends the identifier of the multicast group to the UDR network element, to request to obtain the security information. After determining the security information, the UDR network element sends the security information to the SMF 1 network element.

Alternatively, when the UDR network element does not store the security information corresponding to the identifier of the multicast group, the UDR network element feeds back, to the SMF 1 network element, an indication indicating that the security information is not stored. In this case, the SMF 1 network element needs to determine the security information corresponding to the identifier of the multicast group.

Alternatively, the implementation of step 135 is replaced with the following step:
135c: The SMF 1 network element sends the identifier of the multicast group to the SMF 2 network element, to request to obtain the security information. After determining the security information, the SMF 2 network element sends the security information to the UPF 2 network element, and the UPF 2 network element performs protection on the user plane data. In addition, the SMF 2 network element sends the security information to the SMF 1 network element.

Alternatively, the implementation of step 135 is replaced with the following step:
135d: The SMF 1 network element sends the identifier of the multicast group to the MSF-C network element, to request to obtain the security information. After determining the security information, the MSF-C network element sends the security information to the MSF-U network element, and the MSF-U network element performs protection on the user plane data. In addition, the MSF-C network element sends the security information to the SMF 1 network element.

Therefore, in this application, a procedure of configuring the security information is added to a procedure in which the UE registers with the network including a 5G MBS, so that security of delivering user plane data in the 5G MBS can be ensured.

### Embodiment 10

Embodiment 10 describes an implementation of obtaining only a security policy of a multicast group from a network side when UE joins a service procedure corresponding to an identifier of the multicast group, so that UE that does not subscribe to the network side can obtain a security policy of subscribed UE, to ensure security of data of the unsubscribed UE.

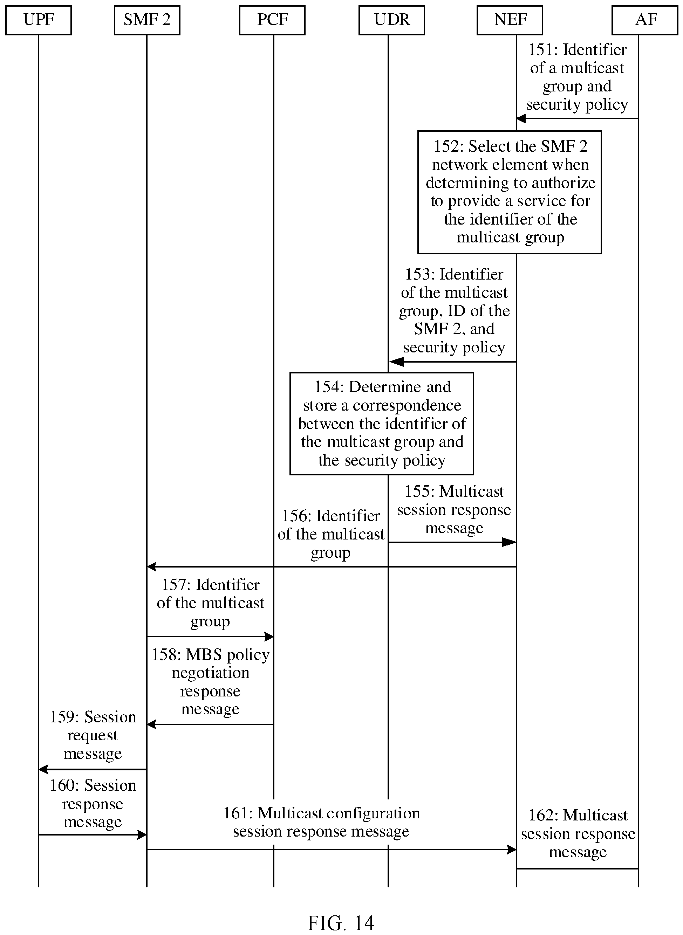

As shown in FIG. 14, an embodiment of this application provides a security policy configuration method. The method includes the following steps:
151: An AF network element sends a multicast session request to an NEF network element, where the request carries the identifier of the multicast group and the security policy.

In some embodiments, the multicast session request is a multicast session request, and the multicast session request carries the identifier of the multicast group, a quality of service (quality of service, QoS) request, and the security policy.

152: The NEF network element selects an SMF 2 network element when determining to authorize to provide a service for the identifier of the multicast group.

153: The NEF network element sends a multicast session request message to a UDR network element, where the request message carries the identifier of the multicast group, an ID of the SMF 2, and the security policy.

154: The UDR network element determines and stores a correspondence between the identifier of the multicast group and the security policy.

155: The UDR network element sends a multicast session response message to the NEF network element.

156: The NEF network element sends a multicast configuration session request (multicast distribution session request) message to the SMF 2 network element, where the message carries the identifier of the multicast group.

157: The SMF 2 network element sends an MBS policy negotiation request (policy association request) message to a PCF network element, where the message carries the identifier of the multicast group.

158: The PCF network element sends an MBS policy negotiation response (policy association response) message to the SMF 2 network element.

159: The SMF 2 network element sends a session request message to a UPF 2 network element.

160: The UPF 2 network element sends a session response message to the SMF 2 network element, where the message carries an ingress address of the UPF 2.

161: The SMF 2 network element sends a multicast configuration session response message to the NEF network element, where the message carries an ingress address of the SMF 2.

162: The NEF network element sends a multicast session response message to the AF network element, where the message carries an ingress address of the NEF network element.

This embodiment focuses on step 151, step 152, step 154, and step 155. Other steps may be optional.

Then, if the UE requests to join the multicast group from the SMF 1 network element, the SMF 2 network element may send the identifier of the multicast group to the UDR network element based on the determined identifier of the multicast group, to request the security policy. After determining the stored security policy based on the identifier of the multicast group, the UDR network element sends the security policy to the SMF 2 network element. The SMF 2 network element may send the security policy to a RAN network element, so that the RAN network element determines an air interface protection manner between the RAN network element and the UE based on the security policy, and sends the air interface protection manner to the UE. In this manner, the RAN network element completes customization of protection for multicast data of the UE based on the security policy sent by the AF network element to a network, to ensure security of the data of the UE.

It should be noted that, in this embodiment of this application, actions such as negotiation and sending of the security policy and the protection manner may alternatively be removed. In this case, the solution of this application may include only an action of determining keys (an encryption key and an integrity protection key) and protection algorithms (an encryption algorithm and an integrity protection algorithm) in the security information. After the actions such as negotiation and sending of the security policy and the protection manner are removed, this embodiment of this application may focus on an implementation of sharing the key and the protection algorithm. In addition, the solution of this application may also support a mechanism of performing only encryption protection, performing only integrity protection, or performing both encryption protection and integrity protection based on a default policy.

For this embodiment of this application, a part of generating the key and/or the protection algorithm may be independently completed by the NEF network element/UDR network element/SMF network element, or may be completed by invoking another NF network element. This is not limited in this application. For example, the NEF network element sends the protection manner to a key management network element, to request the key management network element to generate a corresponding encryption key and/or integrity protection key based on the protection manner. Then, the key management network element returns the encryption key and/or the integrity protection key to the NEF network element. In addition, selection of the protection algorithm is similar to that of the key, and may also be completed by another NF network element. In addition, the key and the algorithm may be fed back to the NEF network element after another entity completes selection. In such a processing manner, the security information can be better determined based on invocation, and functions of entities such as the NEF network element/UDR network element/SMF network element are simplified.

For this embodiment of this application, an action of the UDR network element may alternatively be performed by a UDM network element or the like. This is not limited in this embodiment of this application.

It may be understood that, to implement the foregoing functions, the network function network element provided in this application includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the network function network element may be divided into functional modules based on the foregoing method examples. For example, each functional module may be obtained through division based on each corresponding function, or two or more functions may be integrated into one processing module. The network function network element may be a unified data repository (for example, UDR) network element, a network exposure function (for example, NEF) network element, a session management function (for example, SMF) network element, a multicast service function control plane function (MSF-C) network element, or the like. The integrated module may be implemented in a form of hardware. It should be noted that, in embodiments, division into the modules is an example, is merely logical function division, and may be other division during actual implementation.

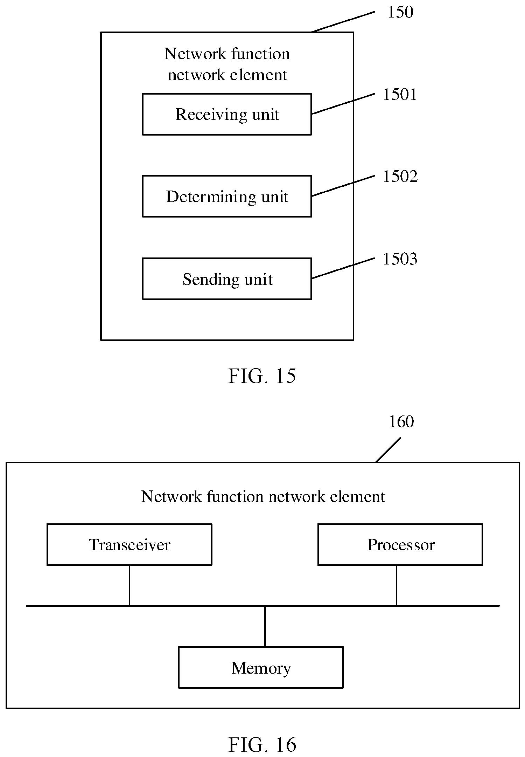

When each functional module is obtained through division based on each corresponding function, FIG. 15 shows a possible schematic composition diagram of a network function network element 150 involved in the foregoing embodiments. As shown in FIG. 15, the network function network element 150 may include a receiving unit 1501, a determining unit 1502, and a sending unit 1503.

The following provides descriptions by using a UDR network element as an example.

The receiving unit 1501 may be configured to support the network function network element 150 in performing step 503, step 602, step 703, step 804, step 905, step 113, step 123, step 135a, step 135b, step 153, and the like, and/or configured to perform another process of the technology described in this specification.

The determining unit 1502 may be configured to support the network function network element 150 in performing step 504, step 603, step 704, step 103, step 114, step 154, and the like, and/or configured to perform another process of the technology described in this specification.

The sending unit 1503 may be configured to support the network function network element 150 in performing step 604, step 705, step 104, step 115, step 155, and the like, and/or configured to perform another process of the technology described in this specification.

It should be noted that all related content of the steps in the foregoing method embodiments may be cited in function description of corresponding functional modules. Details are not described herein again.

The network function network element 150 provided in this embodiment is configured to perform the foregoing security information configuration methods, and therefore can achieve same effects as the foregoing implementation methods.

When an integrated unit is used, the network function network element 150 may include a processing module, a storage module, and a communication module. The processing module may be configured to control and manage an action of the network function network element 150, for example, may be configured to support the network function network element 150 in performing the steps performed by the determining unit 1502. The storage module may be configured to support the network function network element 150 in storing program code, data, and the like. The communication module may be configured to support the network function network element 150 in communicating with another device, for example, communicating with another network function network element, and may support the network function network element 150 in performing the steps performed by the receiving unit 1501 and the sending unit 1503.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another network function network element.

In an embodiment, when the processing module is a processor, the storage module is a memory, and the communication module is a transceiver, the network function network element in this embodiment may be a network function network element 160 having a structure shown in FIG. 16.

An embodiment of this application further provides a network function network element, including one or more processors and one or more memories. The one or more memories are coupled to the one or more processors. The one or more memories are configured to store computer program code, and the computer program code includes computer instructions. When the one or more processors execute the computer instructions, an electronic device is enabled to perform the foregoing related method steps, to implement the security information configuration methods in the foregoing embodiments.

An embodiment of this application further provides a computer-readable storage medium. The computer storage medium stores computer instructions. When the computer instructions are run on a network function network element, the network function network element is enabled to perform the foregoing related method steps, to implement the security information configuration methods in the foregoing embodiments.

An embodiment of this application further provides a computer program product. When the computer program product runs on a computer, the computer is enabled to perform the foregoing related steps, to implement the security information configuration methods performed by the network function network element in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the security information configuration methods performed by the network function network element in the foregoing method embodiments.

The network function network element, the computer storage medium, the computer program product, or the chip provided in embodiments is configured to perform a corresponding method provided above. Therefore, for beneficial effects that can be achieved by the network function network element, the computer storage medium, the computer program product, or the chip, refer to beneficial effects of the corresponding method provided above. Details are not described herein again.

Another embodiment of this application provides a system. The system may include at least one of a unified data repository (for example, UDR) network element, a network exposure function (for example, NEF) network element, a session management function (for example, SMF) network element, and a multicast service function control plane function (MSF-C) network element, and may be configured to implement the foregoing security information configuration methods.

Based on descriptions of the foregoing implementations, a person skilled in the art may understand that, for the purpose of convenient and brief description, division into the foregoing functional modules is merely used as an example for description. During actual application, the foregoing functions can be allocated to different functional modules for implementation based on a requirement. To be specific, an inner structure of an apparatus is divided into different functional modules to implement all or some of the functions described above.

In several embodiments provided in this application, it should be understood that the disclosed apparatuses and methods may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed on different places. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A security information configuration method, wherein the method is applied to a system comprising a multicast-broadcast service architecture, the system comprises a first network function network element and a second network function network element, and the method comprises:
receiving, by the first network function network element, an identifier of a multicast group, and determining security information corresponding to the identifier of the multicast group, wherein the security information is used to perform encryption protection and/or integrity protection on user plane data of the multicast group, and the security information comprises an encryption key and an encryption algorithm and/or an integrity protection key and an integrity protection algorithm; and
sending, by the first network function network element, the security information to the second network function network element, wherein the second network function network element comprises one or more of a multicast service function user plane function network element, a multicast service function control plane function network element, a network exposure function network element, or a session management function network element.

2. The method according to claim 1, wherein the security information further comprises a security policy and/or a protection manner for the user plane data;
the security policy indicates a protection requirement of the user plane data, and the protection requirement comprises an encryption protection requirement and/or an integrity protection requirement; and
the protection manner indicates whether to perform encryption protection on the user plane data and/or whether to perform integrity protection on the user plane data.

3. The method according to claim 2, wherein the security information further comprises the protection manner; and
the receiving an identifier of a multicast group, and determining security information corresponding to the identifier of the multicast group comprises:
receiving the identifier of the multicast group and the security policy from the network exposure function network element or the multicast service function control plane function network element, and determining the protection manner based on the security policy; or receiving the identifier of the multicast group and the protection manner from the network exposure function network element or the multicast service function control plane function network element; and
generating the security information based on the protection manner.

4. The method according to claim 3, wherein the sending the security information to the second network function network element comprises:
sending the security information to the network exposure function network element or the multicast service function control plane function network element.

5. The method according to claim 3 or 4, wherein the first network function network element comprises a unified data repository network element;
after the generating the security information based on the protection manner, the method further comprises:
determining, by the unified data repository network element, a correspondence between the security information and the identifier of the multicast group;
the receiving an identifier of a multicast group, and determining security information corresponding to the identifier of the multicast group further comprises:
receiving, by the unified data repository network element, a request message from the session management function network element, wherein the request message comprises the identifier of the multicast group; and
determining, by the unified data repository network element, the security information corresponding to the identifier of the multicast group based on the correspondence; and
the sending the security information to the second network function network element comprises:
sending, by the unified data repository network element, the security information to the session management function network element.

6. The method according to claim 2, wherein the first network function network element comprises the network exposure function network element or the multicast service function control plane function network element, and the security information further comprises the protection manner;
the receiving an identifier of a multicast group, and determining security information corresponding to the identifier of the multicast group comprises:
receiving, by the network exposure function network element or the multicast service function control plane function network element, the identifier of the multicast group and the security policy from an application function network element;
determining, by the network exposure function network element or the multicast service function control plane function network element, the protection manner based on the security policy; and
generating, by the network exposure function network element or the multicast service function control plane function network element, the security information based on the protection manner; and
the sending the security information to the second network function network element comprises: sending, by the network exposure function network element or the multicast service function control plane function network element, the security information to a unified data repository network element.

7. The method according to claim 3 or 6, wherein the generating the security information based on the protection manner comprises:
generating the encryption key and the encryption algorithm if the protection manner indicates to perform encryption protection on the user plane data; and
generating the integrity protection key and the integrity protection algorithm if the protection manner indicates to perform integrity protection on the user plane data.

8. The method according to claim 2, wherein the first network function network element comprises the network exposure function network element or the multicast service function control plane function network element; and
the receiving an identifier of a multicast group, and determining security information corresponding to the identifier of the multicast group comprises:
receiving, by the network exposure function network element or the multicast service function control plane function network element, the identifier of the multicast group and the security policy from an application function network element;
sending, by the network exposure function network element or the multicast service function control plane function network element, the security policy and the identifier of the multicast group to a unified data repository network element; or determining, by the network exposure function network element or the multicast service function control plane function network element, the protection manner based on the security policy, and sending the protection manner and the identifier of the multicast group to the unified data repository network element; and
receiving, by the network exposure function network element or the multicast service function control plane function network element, the security information from the unified data repository network element.

9. The method according to claim 7 or 8, wherein the sending the security information to the second network function network element comprises:
sending the security information to the multicast service function user plane function network element or the session management function network element.

10. A security information configuration method, wherein the method is applied to a terminal device, a network in which the terminal device is located comprises a session management function network element, and the method comprises:
sending an identifier of a multicast group to the session management function network element, to request to join the multicast group;
receiving security information from the session management function network element, wherein the security information is used to perform encryption protection and/or integrity protection on user plane data of the multicast group, the security information comprises an encryption key and an encryption algorithm and/or an integrity protection key and an integrity protection algorithm, the security information further comprises a security policy and/or a protection manner for the user plane data, the security policy indicates a protection requirement of the user plane data, the protection requirement comprises an encryption protection requirement and/or an integrity protection requirement, and the protection manner indicates whether to perform encryption protection on the user plane data and/or whether to perform integrity protection on the user plane data; and
decrypting the received user plane data based on the security information.

11. A network function network element, wherein the network function network element is a first network function network element, the first network function network element is applied to a system of a multicast-broadcast service architecture, the system comprises the first network function network element and a second network function network element, and the first network function network element comprises:
a transceiver, configured to receive an identifier of a multicast group; and
a processor, configured to determine security information corresponding to the identifier of the multicast group, wherein the security information is used to perform encryption protection and/or integrity protection on user plane data of the multicast group, and the security information comprises an encryption key and an encryption algorithm and/or an integrity protection key and an integrity protection algorithm, wherein
the transceiver is further configured to send the security information to the second network function network element, wherein the second network function network element comprises one or more of a multicast service function user plane function network element, a multicast service function control plane function network element, a network exposure function network element, or a session management function network element.

12. The network function network element according to claim 11, wherein the security information further comprises a security policy and/or a protection manner for the user plane data;
the security policy indicates a protection requirement of the user plane data, and the protection requirement comprises an encryption protection requirement and/or an integrity protection requirement; and
the protection manner indicates whether to perform encryption protection on the user plane data and/or whether to perform integrity protection on the user plane data.

13. The network function network element according to claim 12, wherein the security information further comprises the protection manner;
the transceiver is configured to receive the identifier of the multicast group and the security policy from the network exposure function network element or the multicast service function control plane function network element, and the processor is configured to determine the protection manner based on the security policy; or the transceiver is configured to receive the identifier of the multicast group and the protection manner from the network exposure function network element or the multicast service function control plane function network element; and
the processor is configured to generate the security information based on the protection manner.

14. The network function network element according to claim 13, wherein the transceiver is configured to:
send the security information to the network exposure function network element or the multicast service function control plane function network element.

15. The network function network element according to claim 13 or 14, wherein the first network function network element comprises a unified data repository network element;
the processor is further configured to determine a correspondence between the security information and the identifier of the multicast group;
the transceiver is further configured to receive a request message from the session management function network element, wherein the request message comprises the identifier of the multicast group;
the processor is further configured to determine the security information corresponding to the identifier of the multicast group based on the correspondence; and
the transceiver is further configured to send the security information to the session management function network element.

16. The network function network element according to claim 12, wherein the first network function network element comprises the network exposure function network element or the multicast service function control plane function network element, and the security information further comprises the protection manner;
the transceiver is configured to receive the identifier of the multicast group and the security policy from an application function network element;
the processor is configured to determine the protection manner based on the security policy;
the processor is configured to generate the security information based on the protection manner; and
the transceiver is configured to send the security information to a unified data repository network element.

17. The network function network element according to claim 13 or 16, wherein the processor is configured to:
generate the encryption key and the encryption algorithm if the protection manner indicates to perform encryption protection on the user plane data; and
generate the integrity protection key and the integrity protection algorithm if the protection manner indicates to perform integrity protection on the user plane data.

18. The network function network element according to claim 12, wherein the first network function network element comprises the network exposure function network element or the multicast service function control plane function network element;
the transceiver is configured to receive the identifier of the multicast group and the security policy from an application function network element;
the transceiver is configured to send the security policy and the identifier of the multicast group to a unified data repository network element; or the processor is configured to determine the protection manner based on the security policy, and the transceiver is configured to send the protection manner and the identifier of the multicast group to the unified data repository network element; and
the transceiver is configured to receive the security information from the unified data repository network element.

19. The network function network element according to claim 17 or 18, wherein the transceiver is configured to:
send the security information to the multicast service function user plane function network element or the session management function network element.

20. A terminal device, wherein a network in which the terminal device is located comprises a session management function network element, and the terminal device comprises:
a transceiver, configured to send an identifier of a multicast group to the session management function network element, to request to join the multicast group, wherein
the transceiver is further configured to receive security information from the session management function network element, wherein the security information is used to perform encryption protection and/or integrity protection on user plane data of the multicast group, the security information comprises an encryption key and an encryption algorithm and/or an integrity protection key and an integrity protection algorithm, the security information further comprises a security policy and/or a protection manner for the user plane data, the security policy indicates a protection requirement of the user plane data, the protection requirement comprises an encryption protection requirement and/or an integrity protection requirement, and the protection manner indicates whether to perform encryption protection on the user plane data and/or whether to perform integrity protection on the user plane data; and
a processor, configured to decrypt the received user plane data based on the security information.

21. The method according to claim 10 or the terminal device according to claim 20, wherein the security information further comprises the security policy and/or the protection manner for the user plane data;
the security policy indicates a protection requirement of the user plane data, and the protection requirement comprises an encryption protection requirement and/or an integrity protection requirement; and
the protection manner indicates whether to perform encryption protection on the user plane data and/or whether to perform integrity protection on the user plane data.

22. A computer-readable storage medium, comprising computer instructions, wherein when the computer instructions are run on an electronic device, the electronic device is enabled to perform the method according to any one of claims 1 to 9.

23. A computer-readable storage medium, comprising computer instructions, wherein when the computer instructions are run on an electronic device, the electronic device is enabled to perform the method according to claim 10 or 21.
